# EUROPEAN PATENT SPECIFICATION

(11) **EP 3 844 705 B1**
(45) Date of publication and mention of the grant of the patent: **28.01.2026**
(21) Application number: 19765908.9
(22) Date of filing: 27.08.2019
(51) Int. Cl.: G06Q 50/18

(54) **AEROSPACE IP EXCHANGE**
IP-AUSTAUSCH FÜR DIE LUFTFAHRT
ECHANGE DE PI AÉROSPATIALE

(30) Priority: 28.08.2018 US 201816114756
(43) Date of publication of application: 07.07.2021
(73) Proprietor: SMARTSKY NETWORKS LLC, Morrisville, NC 27560 (US)
(72) Inventor: ROCKAFELLOW, Blane Edward, Raleigh, North Carolina 27613 (US); ESKRIDGE, JR., Elbert Stanford, Chapel Hill, North Carolina 27517 (US); HOLMES, Bruce J., Williamsburg, Virginia 23188 (US)
(74) Representative: Industripatent i Växjö AB
(86) International application number: PCT/US2019/048314
(87) International publication number: WO 2020/046913

(56) References cited:
- US-A1- 2002 091 543

## Description

### CROSS REFERENCE TO RELATED APPLICATIONS

This application claims priority to U.S. application number 16/114,756 filed August 28, 2018.

### TECHNICAL FIELD

Example embodiments generally relate to aerospace community technologies and, in particular, relate to apparatuses, systems, methods and networks for facilitating the exchange of intellectual property (IP) and technologies covered by IP within the aerospace community.

### BACKGROUND

The aerospace community is comprised of hundreds of vendors and partners in industry, government, and academia, creating a complex ecosystem in which access to information tends to be restricted within specific silos created by specific entities or partnerships. Furthermore, much of the underlying technology that supports these individual silos of information was created long before anyone envisioned digital and networked connectivity infrastructure. For example, air traffic control, passenger ticketing and other functions are controlled via antiquated and often proprietary technologies that are not in any way contemplated for connection to each other or to other platforms. This antiquated system results in a fragmented environment that limits opportunities for sharing information and participation in electronic commerce (ecommerce).

IP that has been generated in the aerospace community has historically, much like in other industries, also been exchanged in very limited ways and typically with high corresponding effort and cost. Accordingly, the organizations and various entrepreneurs having technology that could be interesting or helpful to each other within the aerospace community are often unwilling or unable to reach out to each other to develop markets for their innovation and commercialize their IP.

IP exchanges have been developed as general platforms for auctioning or otherwise transferring IP between various parties. However, these platforms are typically very broad in scope and very limited in effectiveness. In this regard, the ability for one party to engage another for an IP exchange is severely limited by the tools offered for match-making by the exchange, and by the parties within any particular segment of technology or industry that happen to use or participate in the exchange. For example, if a company in a particular industry attempts to search a generic IP exchange for relevant technology, the search tools are typically completely unsuitable to the unique context of the relevant technology thereby limiting the effectiveness of the tools. Moreover, if there are only a limited number of other participants within the particular segment of the community, it could be that the participant only encounters opportunities with direct competitors or irrelevant entities, if any other players within the particular community segment are involved in the exchange at all.

Meanwhile, real-time connectivity to aircraft is now becoming available, thereby creating a unique opportunity to provide relevant data to parties associated with the aerospace community. The value of such data to the aerospace community is often influenced by how recent/relevant the data is, and how affordably the data can be acquired. By applying a robust and reasonably priced "pipe" via which aerospace related data can be exchanged quickly and affordably, it is possible to create an ecosystem or platform that is relevant to a vast number of competitors and collaborators within the aerospace community thereby eliminating the prior problems of a lack of connectivity, coupled with the fragmented information in the aerospace community. An effective commerce exchange platform that connects aviation and ecommerce and facilitates elimination of the issues discussed above may therefore be created and attract all relevant players to participate. With relevant players participating, placement of effective tools for IP exchange in the hands of the participants will facilitate improved and/or more efficient mechanisms by which to allow technology and IP exhange.US 2002/091543 A1 (THAKUR RANDHIR P S [US]) 11 July 2002 (2002-07-11) discloses the exchange of descriptions of inventions between innovators and customers.

### BRIEF SUMMARY OF SOME EXAMPLES

The scope of the invention is defined by the independent claims. Dependent claims specify embodiments thereof. Accordingly,
some example embodiments may enable the provision of an aerospace commerce exchange that allows ecommerce activities to be maximized with respect to any connectivity in an aerospace context, and further include an IP exchange layer for enabling IP related assets to be effectively shared. Thus, for example, in some cases inflight bi-directional connectivity without the latency of satellite-based solutions, and with a robust link from the aircraft to the ground (i.e., the return link), may effectively be used to its fullest potential in integration with ecommerce opportunities and IP exchange opportunities. The aerospace commerce exchange (ACE) may be a connector of users, buyers and sellers of aerospace data and IP, so that the connectivity-limiting issues discussed above can be a thing of the past.

In an example embodiment, an aerospace commerce exchange system is provided. The system includes a network including an air-to-ground communication system via which aircraft provide aerospace data to the network in real time via the air-to-ground communication system, a plurality of clients operably coupled to the network, and an aerospace commerce exchange platform operably coupled to a network to provide exchange services to exchange members via respective ones of the clients. The aerospace commerce exchange platform includes an IP exchange module, including a user interface via which the exchange members submit IP assets for storage and tag the IP assets with tags classifying the IP assets by function and type of the IP assets, the IP assets being defined by functional software packages, applications or services related to usage of the aerospace data, an IP asset library configured to store information regarding IP assets provided by the exchange members, and the tags assigned by the exchange members, a search module configured to receive a query defining a search relative to the IP assets by the exchange members, and configured to conduct the search based on correlation of the query to the tags. The search module is configured to facilitate contact between a searcher and a provider relative to a particular asset stored in the IP asset library and found by the searcher using the search module by providing contact information of the provider to the searcher.

In another example embodiment, a search module for searching IP assets stored in an IP asset library of an aerospace commerce exchange is also provided. The search module may include processing circuitry configured to receive an IP query including one or more search terms, process the search terms relative to a multi-dimensional search strategy to generate search results, and facilitate contact between a searcher and a provider relative to a particular asset stored in the IP asset library and found by the searcher using the search module.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system that may be useful in connection with providing exchange services according to an example embodiment;
FIG. 2A illustrates a functional block diagram of an apparatus that may be useful in connection with providing exchange services according to an example embodiment;
FIG. 2B illustrates a conceptual block diagram of various layers that may be embodied and useable in connection with an exchange of an example embodiment;
FIG. 3 illustrates a block diagram of the IP exchange module of an example embodiment;
FIG. 4 illustrates a block diagram of a hierarchical IP asset tagging strategy that may be employed in connection with some example embodiments;
FIG. 5 illustrates a tag structure for a particular IP asset in accordance with an example embodiment;
FIG. 6 is a search interface that may be used to search for IP assets in accordance with an example embodiment;
FIG. 7 is a block diagram of one example of how a multi-dimensional IP asset search can be conducted in accordance with an example embodiment;
FIG. 8 illustrates a block diagram showing how exchange services may be provided in accordance with an example embodiment;
FIG. 9 illustrates a functional block diagram of one particular exchange service, i.e., maintaining an electronic aircraft record, in accordance with an example embodiment;
FIG. 10 illustrates a functional block diagram of one level of activity associated with performance of an exchange service in accordance with an example embodiment; and
FIG. 11 illustrates a method for providing exchange services in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet (or via the "cloud") with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on aerospace (or aviation) data using the techniques described herein. The data processing platform may, for example, be configured to provide an information exchange via which multiple independent or even proprietary platforms may be connected to each other. As such, the data processing platform may be embodied as an aerospace commerce exchange platform (i.e., ACE platform) that connects data producers to data consumers within the aerospace community. The ACE platform further includes an IP exchange layer that is powered by the ACE platform to enable technology sharing in a way not previously provided. By enabling data from a variety of sources to be shared via the ACE platform, new insights may be available to those who access the resources of the ACE platform. The data sharing may attract participants, and therefore further technology sharing may also be enhanced due to the number of relevant parties that are using the ACE platform, and further due to the focused and unique tools that are offered via the IP exchange layer. Thus, for example, digital rights management, licensing, and other transactional services may be employed to control the usage of data and/or exchange of IP on mutually agreeable terms for all participants who access the ACE platform and the IP exchange layer. Accordingly, a commercial framework to connect data and technology providers with current and future data and technology consumers without the need for direct contracting between parties can be provided. This stands in contrast to today's paradigm in which only specific partners who agree to contract with each other to share data and/or technology may exchange information or technology. Thus, even where information and/or technology exchange is provided, the fragmenting of information remains in place such that those specific partnerships that are developed still stand apart from other partnerships and from the greater community of producers and consumers of data. The creation of one exchange platform via which a cohesive experience for tying all partners within the aerospace community together will not only simplify information and technology exchange within the aerospace community, but will vastly expand the potential for future development of technologies in the aerospace community. In some cases, augmenting the general lack of a need for some contacts between parties, the ACE platform an IP exchange layer may provide a mechanism by which to expedite contracts for specific platform related data or transactions (e.g., in the form of smart contracts). Moreover, the unique search and match-making tools of the IP exchange layer provide opportunities for targeted identification of potential partners, sometimes even with anonymity being employed until one or both parties are comfortable exposing their identities to each other. For example, the ACE platform (e.g., via the security module 70 mentioned below) may enable parties to select an option to remain anonymous in either posting or inquiring about IP assets. The anonymity may then be maintained until the parties enter negotiations for IP transfer or when the parties mutually agree to disclose their identities.

Example embodiments not only provide the ACE platform, but also provide various enabling technologies that may facilitate operation of the ACE platform itself or of components that may interact with the ACE platform, such as the IP exchange layer. Example embodiments may also provide for enhancement of specific portions of the exchange environment that is created by the ACE platform. The ACE platform may provide a mechanism by which to enhance ecommerce with in-flight assets via ATG or satellite links or air-to-air links or air-to-sea links, but may also be used for data shared about in-flight assets between entirely terrestrial entities. Thus, aircraft still on the ground using a Wi-Fi, cellular or other terrestrial network may still participate in the ACE. Moreover, ground or sea services related to aircraft, but which never actually touch the aircraft itself may also participate in the ACE. For example, historical data for determining inventory stocking levels based on flight routes and historical data for airport-based marketing campaigns that target travelers after they land may be accessible via the ACE platform. As noted above, attracting partners to the ACE platform for the exchange of valuable data related to the aerospace community also ensures a robust roster of potential partners for IP exchange. Thus, the IP exchange layer enables users of the ACE platform to search for matches to facilitate transfer of technology that may be associated with IP within the aerospace community.

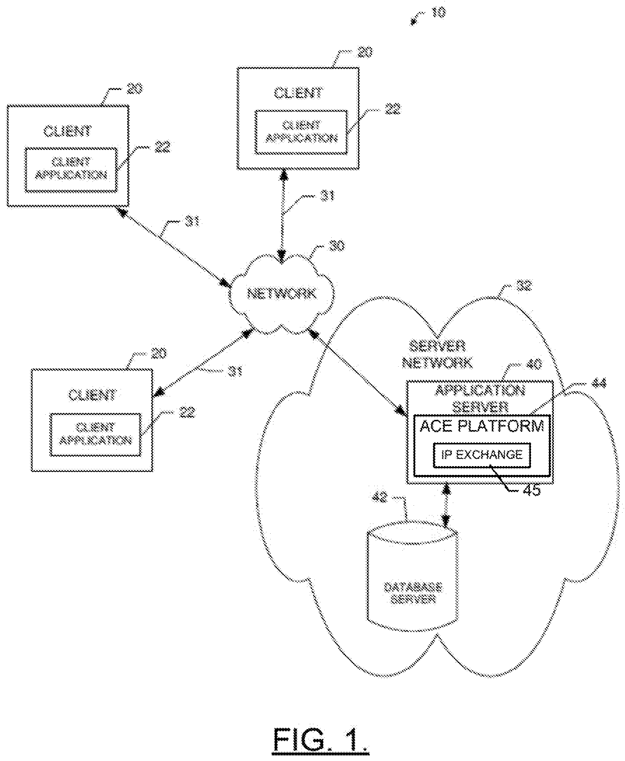

An example embodiment of the invention will now be described in reference to FIG. 1, which illustrates an example system in which an embodiment of the present invention may be employed. As shown in FIG. 1, a system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single organization, department within an organization, or location (i.e., with each one of the clients 20 being associated with an individual analyst of an organization, department or location). However, in some embodiments, each of the clients 20 may be associated with different corresponding locations, departments or organizations. For example, among the clients 20, one client may be associated with a first facility of a first organization and one or more of the other clients may be associated with a second facility of either the first organization or of another organization. In some cases, individual ones of the clients 20 may correspond to respective different aircraft manufacturers, aircraft operators, aircraft maintenance/repair/overhaul (MRO) providers, original equipment manufacturers (OEM) for aviation supplies and equipment, or other data producers and consumers that are involved in the aerospace community or that provide equipment, content, services, etc. that may be useful to those within the aerospace community. Additionally or alternatively, individual ones of the clients 20 may be individual aircraft, plants, divisions, facilities or the like of the entities listed above (or other similar entities). Furthermore, individual ones of the clients 20 may sometimes be other organizations, entities or the like that may wish to consume or contribute to the data and/or technology produced/used in the aerospace community by the preceding entities for participation in ecommerce, IP exchange or the provision of services to such organizations or entities. In general, the clients 20 may be referred to as members of the aerospace commerce exchange or ACE members. However, clients 20 may alternatively or additionally sometimes be companies or individuals on the "edge" of the aerospace community. Some ACE members may therefore be aerospace or non-aerospace entities.

Each one of the clients 20 may include one or more instances of a communication device such as, for example, a computing device (e.g., a computer, a server, a network access terminal, a personal digital assistant (PDA), mobile or wearable device, radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, one or more of the clients 20 (but not necessarily all of them) may include a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing aerospace (or aviation) data as described in greater detail below.

The network 30 may be a data network, such as a local area network (LAN), a metropolitan area network (MAN), a wide area network (WAN) (e.g., the "cloud" or the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms (e.g., links 31) and corresponding communication protocols. In an example embodiment, at least one of the links 31 is a real-time air-to-ground (ATG) communication link between an airborne asset (e.g., an aircraft, drone, or other non-terrestrial device) and the network 30.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to operation of the aircraft, components, terminals or computers with which the clients 20 are associated. For example, the application server 40 may be configured to provide for storage of information descriptive of events or activities associated with one or more aircraft, and/or content produced thereon or intended for delivery thereto. In some cases, these contents may be stored in the database server 42 with or without information identifying entities associated with such information. Alternatively or additionally, the application server 40 may be configured to provide ecommerce, contracting, development, analytical, technology transfer, search, match-making, access to aerospace data, software enablers (i.e., Software Developer Kits) or other tools for use by the clients 20 in accordance with example embodiments. Thus, although some data and/or services may be exchanged amongst members as exchange services, where specific needs or desires are present to contract with other members, the ACE platform 44 may be configured to provide tools for such contracting, and/or provide tools for generation of applications associated with handling such contracting to reduce or even eliminate negotiation in some cases. Moreover, the ACE platform 44 may include an IP exchange module 45, as described in greater detail below, and the IP exchange module 45 may be used to support an IP exchange layer configured for the offering, locating, licensing or selling, and transferring of IP related to aerospace technologies, data and services amongst ACE members.

In some embodiments, for example, the application server 40 may therefore include an instance of an ACE platform 44 comprising stored instructions for handling activities associated with practicing example embodiments as described herein. As such, in some embodiments, the clients 20 may access the ACE platform 44 online and utilize the services provided thereby. However, it should be appreciated that in other embodiments, the ACE platform 44 (or components thereof) may be provided from the application server 40 (e.g., via download over the network 30) to one or more of the clients 20 to enable recipient clients to instantiate an instance of the ACE platform 44 for local operation such that the ACE platform 44 may be a distributed collection of components. As yet another example, the ACE platform 44 may be instantiated at one or more of the clients 20 responsive to downloading instructions from a removable or transferable memory device carrying instructions for instantiating the ACE platform 44 at the corresponding one or more of the clients 20. In such an example, the network 30 may, for example, be a peer-to-peer (P2P) network where one of the clients 20 includes an instance of the ACE platform 44 to enable the corresponding one of the clients 20 to act as a server to other clients 20.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the ACE platform 44 configured to operate in accordance with an example embodiment of the present invention. In this regard, for example, the ACE platform 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which consumers, developers, analysts or others may interact with, configure or otherwise maintain the system 10.

As such, the environment of FIG. 1 illustrates an example in which provision of content and information associated with the aerospace community (e.g., including at least some data provided to/from aircraft in real-time) may be accomplished by a particular entity (namely the ACE platform 44 residing at the application server 40). However, it should be noted again that the ACE platform 44 could alternatively handle provision of content and information within a single organization or entity. Thus, in some embodiments, the ACE platform 44 may be embodied at one or more of the clients 20 and, in such an example, the ACE platform 44 may be configured to handle provision of content and information associated with tasks that are associated only with the corresponding single organization. Access to the ACE platform 44 may therefore be secured as appropriate for the organization or organizations involved and credentials of individuals or entities attempting to utilize the tools provided herein.

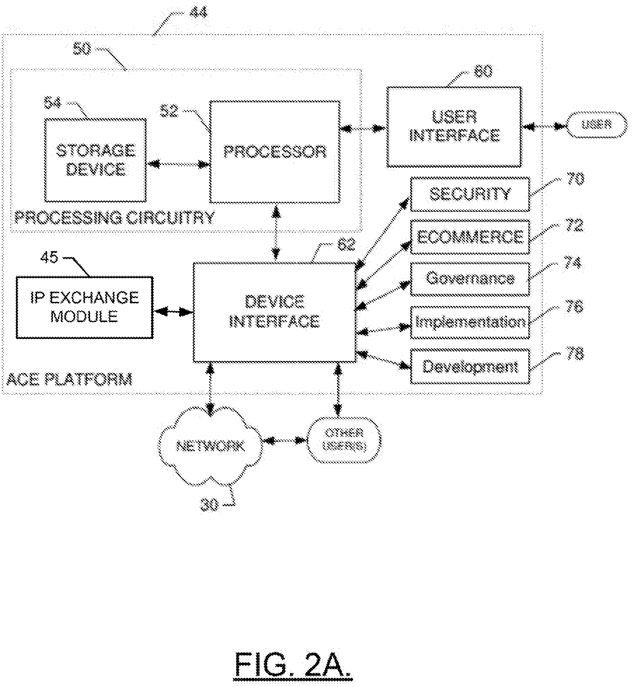

An example embodiment of the invention will now be described with reference to FIG. 2A. FIG. 2A shows certain elements of an apparatus for provision of the ACE platform 44 or other processing circuitry according to an example embodiment. The apparatus of FIG. 2A may be employed, for example, as the ACE platform 44 itself operating at, for example, a network device, server, proxy, or the like (e.g., the application server 40 of FIG. 1)). Alternatively, embodiments may be employed on a combination of devices (e.g., in distributed fashion on a client (e.g., any of the clients 20 of FIG. 1) or a variety of other devices). Accordingly, some embodiments of the present invention may be embodied wholly at a single device (e.g., the application server 40 or one or more clients 20) or by devices in a client/server relationship (e.g., the application server 40 and one or more clients 20). Thus, although FIG. 2A illustrates the ACE platform 44 as including the components shown, it should be appreciated that any of the clients 20 may include respective instances of the components shown in some cases. Furthermore, it should be noted that the devices or elements described below may not be mandatory and thus some may be omitted in certain embodiments.

Referring now to FIG. 2A, an apparatus for provision of tools, services and/or the like for facilitating an exchange for information and services associated therewith in the aerospace community is provided. The apparatus may be an embodiment of the ACE platform 44 or a device hosting the ACE platform 44. As such, configuration of the apparatus as described herein may transform the apparatus into the ACE platform 44. In an example embodiment, the apparatus may include or otherwise be in communication with processing circuitry 50 that is configured to perform data processing, application execution and other processing and management services according to an example embodiment of the present invention. In one embodiment, the processing circuitry 50 includes a storage device 54 and a processor 52 that may be in communication with or otherwise control a user interface 60 and a device interface 62. As such, the processing circuitry 50 may be embodied as a circuit chip (e.g., an integrated circuit chip) configured (e.g., with hardware, software or a combination of hardware and software) to perform operations described herein. However, in some embodiments, the processing circuitry 50 may be embodied as a portion of a server, computer, laptop, workstation or even one of various mobile computing devices. In situations where the processing circuitry 50 is embodied as a server or at a remotely located computing device, the user interface 60 may be disposed at another device (e.g., at a computer terminal or client device such as one of the clients 20) that may be in communication with the processing circuitry 50 via the device interface 62 and/or a network (e.g., network 30).

The user interface 60 may be in communication with the processing circuitry 50 to receive an indication of a user input at the user interface 60 and/or to provide an audible, visual, mechanical or other output to the user. As such, the user interface 60 may include, for example, a keyboard, a mouse, a joystick, a display, a touch screen, a microphone, a speaker, a cell phone, augmented/virtual reality device, electronic sensors, or other input/output mechanisms. In embodiments where the apparatus is embodied at a server or other network entity, the user interface 60 may be limited or even eliminated in some cases. Alternatively, as indicated above, the user interface 60 may be remotely located.

The device interface 62 may include one or more interface mechanisms for enabling communication with other devices and/or networks. In some cases, the device interface 62 may be any means such as a device or circuitry embodied in either hardware, software, or a combination of hardware and software that is configured to receive and/or transmit data from/to a network (e.g., network 30) and/or any other device or module in communication with the processing circuitry 50. In this regard, the device interface 62 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 62 communicates with a network, the network may be any of various examples of wireless or wired communication networks such as, for example, data networks like a Local Area Network (LAN), a Metropolitan Area Network (MAN), and/or a Wide Area Network (WAN), such as the Internet.

In an example embodiment, the storage device 54 may include one or more non-transitory storage or memory devices such as, for example, volatile and/or non-volatile memory that may be either fixed or removable. The storage device 54 may be configured to store information, data, applications, instructions or the like for enabling the apparatus to carry out various functions in accordance with example embodiments of the present invention. For example, the storage device 54 could be configured to buffer input data for processing by the processor 52. Additionally or alternatively, the storage device 54 could be configured to store instructions for execution by the processor 52. As yet another alternative, the storage device 54 may include one of a plurality of databases (e.g., database server 42) that may store a variety of files, contents or data sets. Among the contents of the storage device 54, applications (e.g., client application 22 or service application 42) may be stored for execution by the processor 52 in order to carry out the functionality associated with each respective application.

The processor 52 may be embodied in a number of different ways. For example, the processor 52 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 52 may be configured to execute instructions stored in the storage device 54 or otherwise accessible to the processor 52. As such, whether configured by hardware or software methods, or by a combination thereof, the processor 52 may represent an entity (e.g., physically embodied in circuitry) capable of performing operations according to embodiments of the present invention while configured accordingly. Thus, for example, when the processor 52 is embodied as an ASIC, FPGA or the like, the processor 52 may be specifically configured hardware for conducting the operations described herein. Alternatively, as another example, when the processor 52 is embodied as an executor of software instructions, the instructions may specifically configure the processor 52 to perform the operations described herein.

In an example embodiment, the processor 52 (or the processing circuitry 50) may be embodied as, include or otherwise control the ACE platform 44, which may be any means such as a device or circuitry operating in accordance with software or otherwise embodied in hardware or a combination of hardware and software (e.g., processor 52 operating under software control, the processor 52 embodied as an ASIC or FPGA specifically configured to perform the operations described herein, or a combination thereof) thereby configuring the device or circuitry to perform the corresponding functions of the ACE platform 44 as described below.

The ACE platform 44 may be configured to include tools to facilitate the creation, consumption, use, management and distribution of aerospace information via the network 30. The tools may be provided in the form of various modules that may be instantiated by configuration of the processing circuitry 50. FIG. 2A illustrates some examples of modules that may be included in the ACE platform 44 and that may be individually configured to perform one or more of the individual tasks or functions generally attributable to the ACE platform 44 according to an example embodiment. However, the ACE platform 44 need not necessarily be modular. In cases where the ACE platform 44 employs modules, the modules may, for example, be configured to perform the tasks and functions described herein. In some embodiments, the ACE platform 44 and/or any modules comprising the ACE platform 44 may be any means such as a device or circuitry operating in accordance with software or otherwise embodied in hardware or a combination of hardware and software (e.g., processor 52 operating under software control, the processor 52 embodied as an ASIC or FPGA specifically configured to perform the operations described herein, or a combination thereof) thereby configuring the device or circuitry to perform the corresponding functions of the ACE platform 44 and/or any modules thereof, as described herein.

One such module that may be included in the ACE platform 44 may be the IP exchange module 45. As mentioned above, the IP exchange module 45 may be configured to support an IP exchange layer configured for the offering, locating, testing and transferring of IP related to aerospace technologies, data and services amongst ACE members. In particular, for example, the IP exchange module 45 may be configured to define a structure for receiving and storing IP indicators in a structured way to facilitate query-based searching, browsing or other methods by which to locate IP assets of interest. The IP exchange module 45 is further configured to determine matches for queries, facilitate contact between parties involved in an IP transfer, and even facilitate the IP transfer itself. However, at least some of these capabilities may be supported, augmented or otherwise operable in connection with the operation of various other modules described below and also shown in FIG. 2A.

In this regard, as shown in FIG. 2A, the ACE platform 44 may include a security module 70. The security module 70 may be configured to enforce data security and data/user access control. In some example embodiments, the security module 70 may use authentication and authorization tools to manage the provision of access to users wishing to access the ACE platform 44, in some cases in real time and in other cases for controlling access to data in a non-real time environment. The identities of members posting or inquiring about IP assets may also be scrubbed by the security module 70 in some cases (e.g., at the option of such members). In some embodiments, the security module 70 may be configured to verify and seal every block of information transmitted over the network 30. Moreover, the security module 70 may be configured to ensure that information on the network cannot be changed, and is saved in a way that is transparent to all users so that the integrity of the information can be maintained. With the integrity of the information on the network 30 assured, companies can access, use, and distribute information while being sure that the information is authentic and is the same information accessible to all other users. In some embodiments, the security module 70 may be configured to use blockchain technology to achieve the integrity described above. The use of blockchain will be described in greater detail below.

The ACE platform 44 may also include an ecommerce module 72. The ecommerce module 72 may be configured to provide a marketplace for various applications or services that may be desirable by various entities using the ACE platform 44. For example, the ecommerce module 72 may provide an application programming interface (API) marketplace where authors may submit various APIs that have been developed for use with respect to data provided via the network 30. The APIs may be tailored to processing, analyzing, generating reports, or otherwise utilizing the data (i.e., aerospace or aviation data, and data related to mobility operations) in a way that may be beneficial to ACE members.

The ecommerce module 72 may also include tools for making and receiving digital payments. Thus, for example, any payments that may be due based on market defined pricing established using the ACE platform 44 may be processed directly on the ACE platform 44 between ACE members. Timely payment processing and clearing of transactions among ACE members may therefore be handled within the secure environment provided by the ACE platform 44.

In some example embodiments, the ACE platform 44 may also include a governance module 74. The governance module 74 may be configured to define or implement acceptance protocols and procedures for entities or parties wishing to become ACE members. Thus, for example, a party or entity may request membership to the ACE. The membership request may be in the form of an application or other communication that can be processed electronically via the ACE platform 44. In response to receipt of the request, management and governance information may be provided to the requesting party or entity and, upon acceptance of terms and conditions, membership may be granted. Upon granting of membership, the protocols for interface with the ACE platform 44 may be employed by the new member to access the ACE platform 44 in accordance with the management and governance information. Developer guidelines and any documentation needed to enable the new member to use the other modules (e.g., for application or API creation, ecommerce, and/or the like) may also be provided. In some cases, user reviews may be initiated by members responsive to completion of transactions with such members or responsive to receipt of data or services therefrom. The reviews may be communicated to members or used by governing bodies to provide feedback to members or discipline members as appropriate.

In some cases, the ACE platform 44 may also include an implementation module 76. The implementation module 76 may manage the architecture of the ACE platform 44 and provide various functional services associated with operation of the ACE platform 44. For example, the implementation module 76 may be configured to perform usage tracking, auditing and/or logging on an individual and/or member-wide basis. Thus, for specific members, usage by individuals associated with the member can be tracked, audited or logged and thereafter accessed by the member. Unique ID keys may be associated with individuals or data lines to facilitate such tracking, auditing or logging.

In an example embodiment, the implementation module 76 may also define a common protocol for management of the ACE platform 44. Thus, all protocols for communication and operation of the ACE platform 44 may be managed by the implementation module 76. The addition of data fields, management of search services, data trustworthiness verification, quality of service identification and other services may therefore be provided by the implementation module 76. The implementation module 76 may also be configured to handle ATG communication (e.g., via the link 31 that corresponds to a real-time ATG link), satellite communications and ground-to-ground communication by any other links of the system 10. In some cases, the implementation module 76 may also provide language services such as, for example, allowing maintenance of client libraries in multiple languages so that one client associated with a particular location can provide content or services to other clients at other locations, even if such other locations generally are associated with speakers of languages different than the language of the particular location.

In some embodiments, the ACE platform 44 may further include a development module 78. The development module 78 may include development tools for defining APIs or applications for the marketplace maintained by the ecommerce module 72 as described above. Thus, for example, development tools that are configured to conform to the protocols of the ACE platform 44 may be provided by the development module 78. Moreover, the development module 78 may provide a developer sandbox, developer community support tools and testing infrastructure tools for the ACE platform 44.

In an example embodiment, the development module 78 may provide tools for expanding or implementing the capabilities of the other modules (70, 72, 74 and 76). Thus, for example, the development module 78 may be employed to define smart contracts that can expedite agreement between parties relative to data or services not specifically covered by virtue of participation in the exchange, and that further may use blockchain technology to support the administration and execution of said smart contracts. For example, if a particular transaction between parties becomes relatively commonplace, or is at least desirable to standardize in some way, the development module 78 may be used in cooperation with either or both of the ecommerce module 72 and the implementation module 76 (with security provided by the security module 70) to define one or more smart contracts that can be easily processed within the framework of the ACE platform 44 to expedite approval by all applicable parties. The contracts themselves may be stored for selection or modification before proposal to another party, and the contracts may be part of, or use functionality of, either or both of the ecommerce module 72 (e.g., for handling payments) and the implementation module 76 (e.g., for managing the processing of the approval process).

The ACE platform 44 may include members in a number of different areas that relate to the aerospace community and/or mobility operations. Moreover, the members may be attracted to the ACE platform 44 precisely because of the ease by which members can interact with other members, or use data that is associated with the ACE, whether the data relates to the time before, during, in between, or after flights. Members may include entities or parties associated with flight operations, passenger services, airports, airport-based retailers, other retailers, advertisers, marketers, meteorology, data analytics, commercial airlines, travel agencies, aircraft manufacturers, aircraft MROs and OEMs, content providers and/or the like.

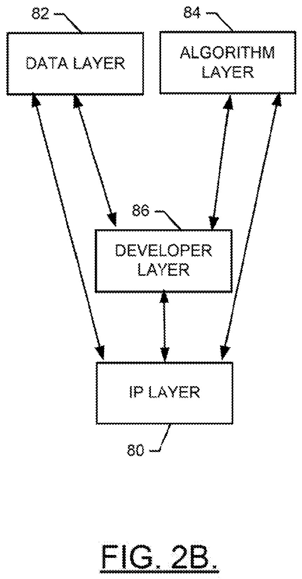

Members may access the ACE platform 44 in some cases to, for example, access an IP exchange layer to enable the members to search for IP technology transfer opportunities with other members. To facilitate this, the IP exchange module 45 may be configured to define specific data storage structures for IP assets that support a multi-dimensional search (i.e., a 3D search) that ensures that the best matches possible can be provided to searching members. FIG. 2B illustrates (via conceptual block diagram) the IP exchange layer 80 that is managed by the IP exchange module 45 to enable interface with a data layer 82, an algorithm layer 84, and a developer layer 86 that are each managed by the ACE platform 44. A common problem in a number of industries, but particularly in the aerospace community, is that different companies or entities tend to use data from various different sources (e.g., public and/or proprietary). With different data sources, and no good way to know what data source any particular party may be using, it is difficult to harmonize applications and services within the community. However, the data layer 82 may be used as a repository for data that is shared among members of the exchange. The data may be de-identified where appropriate to ensure willingness of members to submit such data. In some cases, the data may be normalized, or otherwise processed with the consent and/or participation of the submitting members, to ensure data quality, accuracy and format are all suitable for use by other members. By providing the ACE platform 44, and particularly the data layer 82 for enabling members to access aerospace data (both generated inside and outside the network 30) via the network 30, a common data source can be provided. The algorithm layer 84 may then be configured to include software packages (e.g., apps) associated with corresponding particular functions that may be transferable among the members of the exchange. These software packages may be examples of IP assets described herein. The developer layer 86 may be configured to facilitate additional development of applications or services using the data and/or software packages associated with the data layer 82 or the algorithm layer 84 by including tools useful in either endeavor. As noted above, each of the software packages, applications or services may be treated as, include or otherwise be associated with an IP asset. Thus, the IP layer 80 may be used to ensure that the IP assets are registered into the exchange in a consistent way to permit potential sharing of such technology when members decide to offer the IP assets to other members. The registration may include storage in a consistent and unique paradigm to enable searching for the IP assets and to enable managing transfer (or otherwise enable management) of the IP assets associated with the software packages, the applications or the services. As a result, new technology may be rapidly developed, stored in an easy to search format, and distributed to interested parties all using a single community-specific platform.

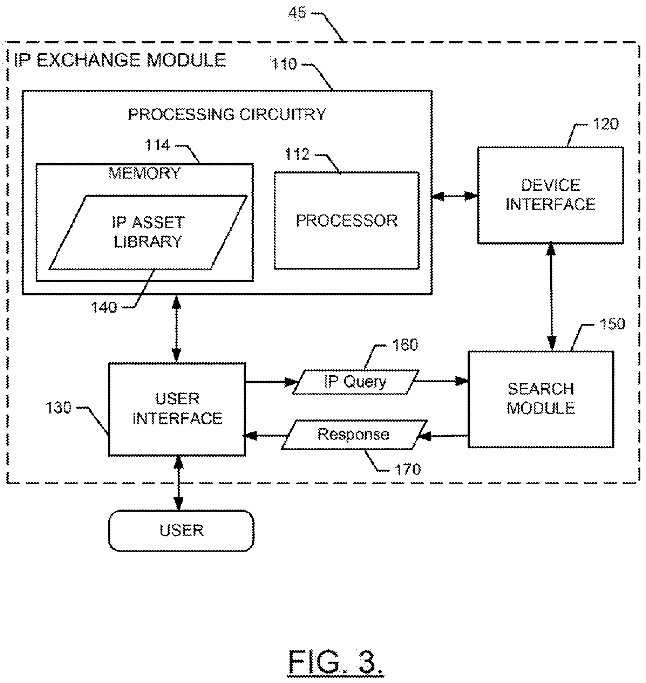

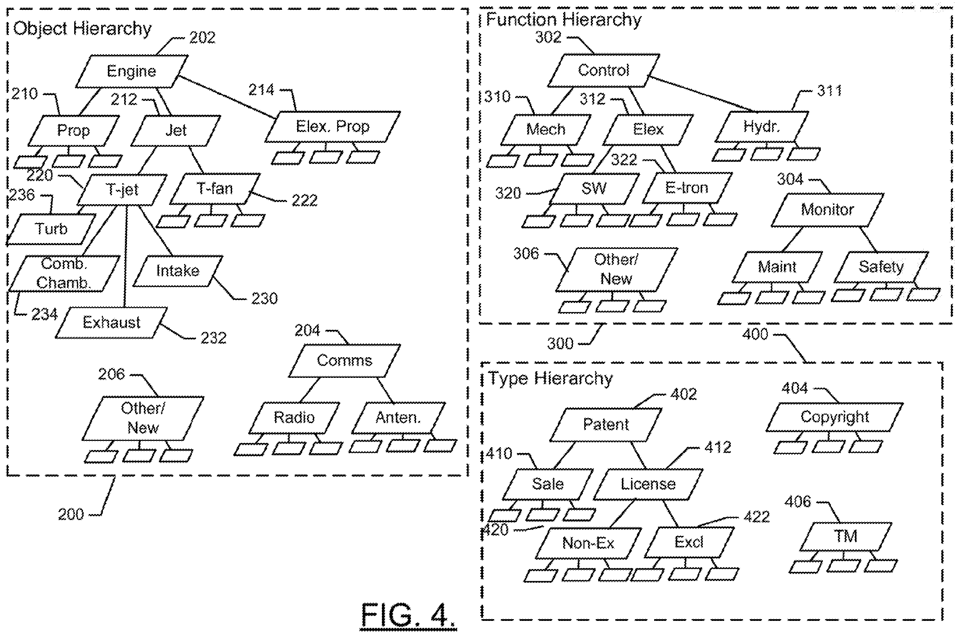

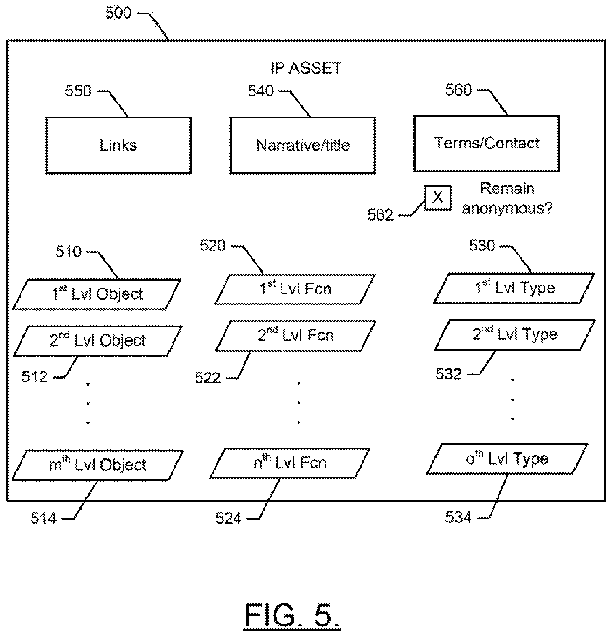

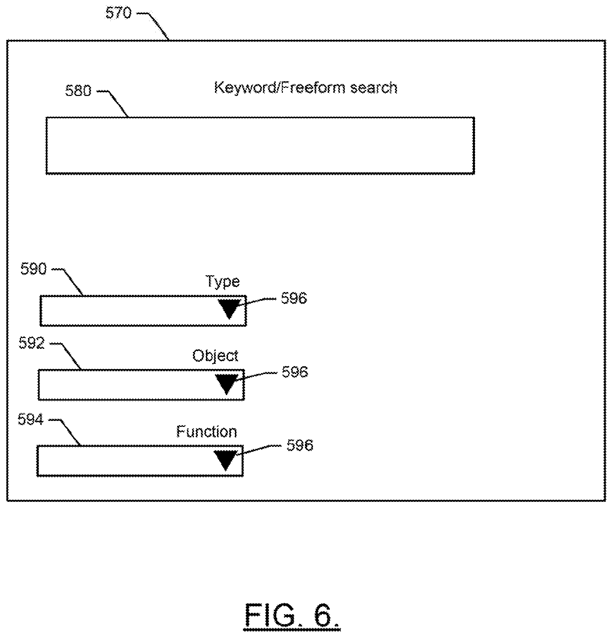

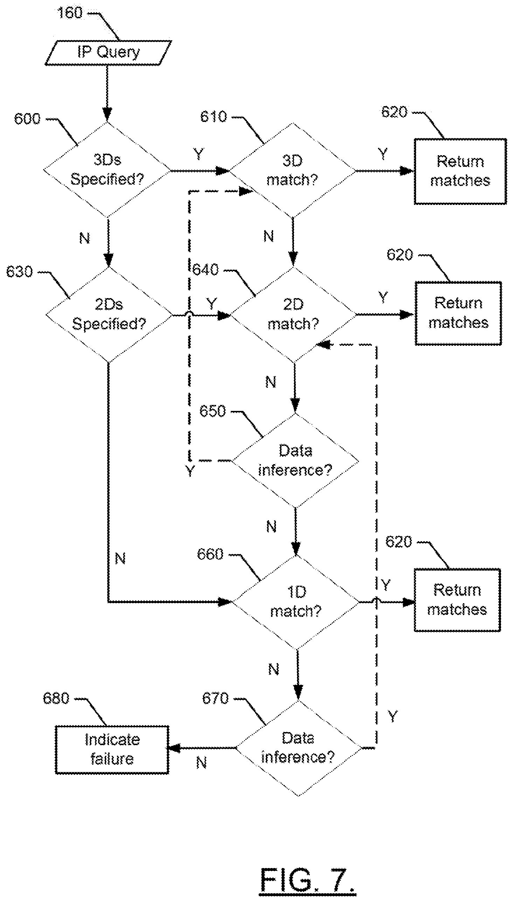

FIGS. 3-6 illustrate various tools and processes that may be used to support such storage and searching with respect to the IP layer 80 for the ACE platform 44 in accordance with an example embodiment. In this regard, FIG. 3 illustrates a block diagram of the IP exchange module 45 of an example embodiment, and FIG. 4 illustrates a block diagram of a hierarchical IP asset tagging strategy that may be employed in connection with some example embodiments. FIG. 5 illustrates a tag structure for a particular IP asset, and FIG. 6 is a search interface that may be used to search for IP assets. FIG. 7 is a block diagram of one example of how a multi-dimensional IP asset search can be conducted in accordance with an example embodiment.

As shown in FIG. 3, the IP exchange module 45 may include processing circuitry 110, which may be embodied as the same or a separate instance of the processing circuitry 50 described above in reference to FIG. 2A. However, even if embodied as a separate instance, the processing circuitry 110 may be functionally and/or structurally similar to the processing circuitry 50 described above, so another such description will not be repeated. Similarly, the structures and/or functions of processor 112, memory 114, device interface 120 and user interface 130 may be similar to respective ones of processor 52, memory 54, device interface 62 and user interface 60 described above, so descriptions of such components again need not be repeated. The memory 114 may store, among other things, an IP asset library 140. The IP exchange module 45 may also include a search module 150 that is configured to conduct search operations for IP assets stored in the IP asset library 140. In this regard, for example, the IP assets stored in the IP asset library 140 may each be stored therein to include specific IP indicators or tags that are formatted in a particular way that enables the best possible matching of IP queries 160 that are formulated from interaction with the user. Accordingly, a response 170 to any particular IP query 160 may include the best possible results.

In particular, the IP assets that are entered into the IP asset library 140 may each include a specific structure that facilitates the accuracy of search functionality. For example, in some example embodiments, the IP asset library 140 may be structured to require that each of the IP assets be entered to include, or otherwise associated with, multi-dimensional tags that are, within each respective dimension (or category), hierarchically structured to indicate various levels of specificity. In some cases, the multi-dimensional tags may also be selected to be relevant to the aerospace community or to IP assets in general. For example, one category or dimension may be descriptive of IP assets and another (or others) may be descriptive of aerospace components, functions, etc. As such, the separate dimensions may be populated with tags that are related only to other tags within their own dimension and are independent of or unrelated to tags in other dimensions, and therefore categorically distinct groups by which the IP assets are characterized. Moreover, as will be discussed in greater detail below, the IP asset library 140 may also be dynamic in nature so that the hierarchical structure is updateable to retain relevance over time. FIG. 4 illustrates one example of a structure for multiple different dimensions that can be provided in respective hierarchical groups.

Referring now to FIG. 4, one hierarchical group or dimension may be allocated to each of an object classification, a functional classification and a type classification. These are each unrelated categories since an object is not a function nor an IP type, and a function is also not an IP type. Every object tag is descriptive of a thing in a physical sense, every function tag is descriptive of what various things might do or be useful for, and every type tag is descriptive of legal rights. Thus, for example, within an object hierarchy 200, a plurality of first level objects associated with the aerospace community may be defined. The objects include the international air traffic management (ATM) community concept of a complete flight data object (e.g., an virtual data object containing an accumulation of all acknowledged information about a flight, in the form of a flight information data model knows as the Flight Information Exchange Model (FIXM), the Aeronautical Information Exchange Model (AIXM) for information engineering standards for current and future aeronautical information system requirements, the Weather Information Exchanger Model (WXXM) enabling the management and distribution of weather data in digital form). In this example, the first level objects may include an engine category 202 and a communications category 204. However, it can be appreciated that a large number of additional (or different) object categories may also be defined for wings, cabin components, landing gear, navigation equipment, hydraulic and electrical systems, and numerous other aerospace-related components or physical/structural systems and parts. It is also possible for a user entering an IP asset into the IP asset library 140 to define a new first level (or any other level) object category 206.

Under each respective first level object category, multiple subcategories may be further defined. In the example of FIG. 4, second level objects within the engine category 202 may include a propeller category 210, a jet category 212, and an electric propulsion category 214. New second level object categories may also be defined, as mentioned above. Then, third level object categories (e.g., turbojet category 220, and turbofan category 222) may be defined for each respective second level object category and fourth level object categories (e.g., intake category 230, exhaust category 232, combustion chamber category 234, and turbine category 236) may be defined for each respective third level object category. Further refinement can continue to any desired level of object categories, and each individual level can be modified to include new categories at any level. As such, the propeller category 210 and the electric propulsion category 214 may each have corresponding second, third, fourth and/or additional level object categories. Thus, although a default structure may be generated a priori, the user may also modify the default structure to define categories that are created in the future or for new IP assets in areas where such assets had not previously been stored in association the respective areas.

As shown in FIG. 4, another dimension or hierarchical group may include a function hierarchy 300. The function hierarchy 300 may be defined by a plurality of first level functions associated with the aerospace community. In this example, the first level functions may include a control category 302 and a monitoring category 304. However, it can be appreciated that a large number of additional (or different) functional categories may also be defined for any of a number of other functions that could be served by aerospace-related components or physical/structural systems and parts. It is also possible for a user entering an IP asset into the IP asset library 140 to define a new first level (or any other level) functional category 306.

Under each respective first level functional category, multiple subcategories may be further defined. In the example of FIG. 4, second level functions within the control category 302 may include a mechanical category 310, hydraulic category 311, and an electrical category 312. New second level function categories may also be defined, as mentioned above. Then, third level function categories (e.g., software category 320 and electronics category 322) may be defined for each respective second level function category and fourth level function categories may be defined for each respective third level function category. Further refinement can continue to any desired level of function categories, and each individual level can be modified to include new categories at any level.

A type hierarchy 400 may also be defined including a patent category 402, a trademark category 404 and a copyright category 406 as the various first level type categories. Second level type categories may be defined within each respective first level type category such as, for example, sale category 410 and license category 412. Third level type categories may further define types of licenses such as, for example, a non-exclusive category 420 and an exclusive category 422. As noted above, further refinements or additions may be possible so that for both type and function as well, although a default structure may be generated a priori, the user may also modify the default structure to define function and type categories that are created in the future or for new IP assets in areas where such assets had not previously been stored in association the respective areas.

Each time a member of the ACE platform 44 wishes to utilize the IP layer to submit an IP asset that the member is interested in engaging in potential technology transfer with respect to, the member may be prompted during the storing process to tag the IP asset with appropriate tags at as many levels within each dimension of classification as is possible. For example, if a company specializes in making software components that control the temperature within the combustion chamber of a turbojet engine, and the company has a patent that they wish to license on a non-exclusive basis, the corresponding IP asset may be entered into the IP asset library 140 with a narrative description of the asset or any corresponding links to the patent or other useful information. The IP asset may also be tagged with object tags including at least those associated with the engine category 202, the jet category 212, the turbojet category 220 and the combustion chamber category 234, with functional tags including at least those associated with the control category 302, the electric category 312, and the software category 320, and with type tags including at least those associated with the patent category 402, the license category 412, and the non-exclusive category 420. In some cases, the type hierarchy 400 may further include a general or "all" category that is intended to generically cover any and all IP rights that may be associated with the corresponding IP assets. Thus, a general or all-inclusive tag may also be included within the type hierarchy 400.

FIG. 5 illustrates an example structure for an IP asset 500 according to an example embodiment. The IP asset 500 may include a first level object tag 510, a second level object tag 512 and any number of additional object tags down to and including an m^{th} level object tag 514. The IP asset 500 may also include a first level function tag 520, a second level function tag 522 and any number of additional function tags down to and including an n^{th} level function tag 524. Similarly, the IP asset 500 may include a first level type tag 530, a second level type tag 532 and any number of additional object tags down to and including an o^{th} level type tag 534. In some cases, the IP asset 500 may further include a title or narrative description 540 to let a person reviewing the IP asset 500 get an appreciation for what the IP asset specifically is or is intended to do. In some cases, the IP asset 500 may also include links 500 to one or more external resources such as, for example, copies of pertinent documents or descriptors of the IP asset 500. Additionally, or optionally, the IP asset 500 may also include terms or contact information 560 (or a link for accessing the same) to enable an interested party to reach the member that has registered or authorized registration of the IP asset 500 into the IP asset library 140. In some cases, an option 562 may be selected to allow initial inquiries to be kept anonymous, thereby hiding the identity of either the party making an initial inquiry regarding the IP asset 500 or the party registering the IP asset 500.

Example embodiments may clearly have utility with respect to classification of existing technologies. This improved ability to classify existing technologies, and facilitate IP transfer relative to such technologies, may enable effective searching for those looking for existing pieces of technology on which to build, or for those looking to integrate existing pieces of technology into their own new development efforts. However, example embodiments may also provide a system that is capable of domain creation and expansion that further enables the classification of developing and future technologies. For example, the emerging domain of electric propulsion systems for aircraft is developing and will continue to develop over the coming decades. New components, functions and corresponding IP will likely be developed to support the advancements that are generated in relation to electric propulsion systems and example embodiments may be used to define a collaborative platform via which those advancements can be shared with the aerospace community to accelerate adoption, improve performance and facilitate continued growth in, and ultimately transform, this and other domains in aviation.

As noted above, by providing the tags at various levels and dimensions as descriptors for the IP assets 500, after the IP assets 500 have been created and registered to the IP asset library 140, it may be possible to accurately and quickly search for assets by those interested in locating the existence of such assets. FIG. 6 illustrates an interface for initiating searches, and FIG. 7 illustrates one example of the process the search module 150 may utilize to respond to the IP query 160 shown in FIG. 3. In this regard, the user (which may be a different user than the user that registers the IP asset 500 to the IP asset library 140) may be enabled to provide the IP query 160 to the search module 150. In an example embodiment, the user interface 130 may be configured to generate control console screens to solicit information from a user putting the IP asset 500 into the IP asset library 140 for each of the three categories or dimensions so that the IP asset 500 is tagged appropriately. The user interface 130 (whether a same or different instance than the user interface 130 used for entry) may also be configured to generate control console screens to solicit search terms from another user searching for IP asset candidates for technology transfer. The search control console screens may be configured to solicit search terms via any of a number of ways. For example, as shown in FIG. 6, a search screen 570 could be configured to enable the user to enter one or more terms as keyword search terms without specifying in which dimension or category such terms should be found via a keyword or freeform search window 580. Terms entered into the keyword or freeform search window 580 can be searched against each of the three hierarchical categories of this example (e.g., type, function and object). The search screen 570 may also or alternatively include one search window for each respective one of the dimensions or categories. In this regard, for example a type search window 590, an object search window 592 and a function search window 594 may each be provided to receive respective search terms. Although the user can enter text into such windows to define the search terms, a drop down menu of all options within the respective categories may also be accessed via selection of icon 596. Accordingly, the user may enter a search term into one, two or all three different category-specific search windows to define the IP query 160. The IP query 160 may then, for example, be processed by the search module 150 in the manner described in reference to FIG. 7.

As shown in FIG. 7, the search module 150 may be configured to determine whether the IP query 160 includes three defined dimensional search terms at operation 600. If so, the search module 150 may then determine whether a match can be found for IP assets having dimensional tags matching all three-dimensional search terms (regardless of level) at operation 610. If a match of all three search terms is found, the match (or multiple matches) will be returned to the user at operation 620 (i.e., as the response 170 of FIG. 3).

Returning to operation 600, if user has not provided the IP query 160 to include three defined dimensional search terms, then the search module 150 may determine whether two defined dimensional search terms were included in the IP query 160 at operation 630. If so, then a determination as to whether a match can be found for IP assets having dimensional tags matching both dimensional search terms (regardless of level) at operation 640. Of note, operation 640 will also be executed responsive to a determination at operation 610 that all three-dimensional search terms did not match. If a match of both search terms is found responsive to execution of operation 640, the match (or multiple matches) may simply be returned to the user at operation 620 (i.e., as the response 170 of FIG. 3). However, if both search terms do not match, a determination may be made at operation 650 as to whether a data inference can be made to infer either the missing dimension or one of the non-matched dimensions as described in greater detail below. If a data inference can be made, the missing dimension may be inferred and an effort to determine a three-dimensional match may be performed at operation 610 as shown by the dashed flow line from operation 650 to 610.

If, at operation 630, it is determined that the IP query 160 does not include two defined dimensional search terms, or if a 2D match is not achieved at operation 640 and no data inference could be made at operation 650, the search module 150 may determine whether a 1D match can be found at operation 660. If so, the match (or multiple matches) may simply be returned to the user at operation 620 (i.e., as the response 170 of FIG. 3). However, if no search term matches, a determination may be made at operation 670 as to whether a data inference can be made to infer either the missing dimensions or one of the non-matched dimensions as described in greater detail below. If a data inference can be made, the missing dimension(s) may be inferred and an effort to determine a two-dimensional match may be performed at operation 640 as shown by the dashed flow line from operation 670 to 640. However, if no data inference can be made, then an indication of the failure of the search may be provided to the user at operation 680, and the user can try to enter different search terms.

In the context of returning matches (i.e., at operation 620), the matching results may be ranked, and displayed by rank. In an example embodiment, ranking may be performed by assigning weight values to the matched terms. In this regard, for example, the higher the level of the matched term, the greater the weight assigned. Given that a fourth level function tag generally indicates a higher degree of specificity than a first level function tag (which is fairly general), matching a search term to a fourth level function tag would be given a higher weight (at least for the function category) than the weight assigned to a match of the first level function tag. Accordingly, the search module 150 may add up the weights assigned in each of the dimensions and assign an aggregated weight. The results may then be displayed in order of aggregated weight to ensure that the best results (i.e., results with the greatest degree of specificity in matching) are provided on top, first or otherwise ranked the highest.

In an example embodiment, the data inferences may be made based upon dynamic machine learning programmed into the search module 150 of FIG. 3 to enable the search module 150 to infer inter-category relationships and/or intra-category relationships. Intra-category relationships may be inferred based on using synonyms or other related terms in place for a term submitted by the user. Thus, for example, if the term "blade" is used as an object search term, the search module 150 may include information correlating "blade" to other objects such as antennas, propellers, motors, fuel cells, fuel storage devices, or turbines that may have a likelihood of being closely related to the term "blade" or that may be synonyms thereof. The user may be prompted to clarify whether the term "blade" is meant to associate to one of the three known options. If the user selects one of the options, the data inference is successful and the search module 150 may continue the search process by using the clarified term within the category. Thus, for example, in some cases the search module 150 may be configured with a priori knowledge of potential relationships between terms that are used in the same hierarchy, or relationships between terms not in any hierarchy and terms within a hierarchy (e.g., as synonyms, etc.). As such, for example, the search module 150 may include word associations based on meaning to conduct inferences for intra-category relationships.

In some cases, inter-category relationships may be recognized not based on meaning, but based on the number or frequency of associations between tags in different categories. For example, if the object tag for "blade" is associated with various functional tags such as mechanical control (30%), temperature monitoring for safety (25%) and temperature monitoring for maintenance (13%), the frequency of association with these respective function tags could be used to infer a potential function tag. Thus, the links or associations between usage of terms in different hierarchies can be used to infer a likelihood of one such term being inferable based on the presence of another term in a different hierarchy. For example, the user may be prompted to clarify whether the term "blade" is meant to correlate to the respective function tags mentioned above in the absence of any functional search term being entered. Thus, if the only search term entered is "blade" as an object search term, then it may be possible to infer another search term using likelihood scoring associated with the term provided. If the user selects one of the options provided, the data inference is successful and the search module 150 may continue using the clarified term in the corresponding additional dimension or category. It should also be appreciated that the inferences could be automatically made (or attempted) in some cases. In other words, rather than prompting the user to confirm a potential link, the search module 150 may be configured to select the most likely potential link automatically. Thus, while the determination of possible intra-category and/or inter-category relationships may be automatic in some cases, the search module 150 may be configured to either request user confirmation (e.g., thereby adding a manual confirmation step) or proceed without such confirmation to (e.g., automatically self-confirming based on likelihood scoring). Moreover, the determination or use of automatic or manual data inferences may be options that are selected by the user in some cases.

Accordingly, as can be appreciated by the descriptions above, example embodiments may enable the use of an IP layer that allows receipt and storage of IP assets so that multi-dimensional query-based searching can be conducted to locate IP assets of interest. The IP assets can be reviewed, and contact may be made between members to facilitate IP transfers, in cooperation with the operation of various other modules described below and also shown in FIGS. 2A and 2B.

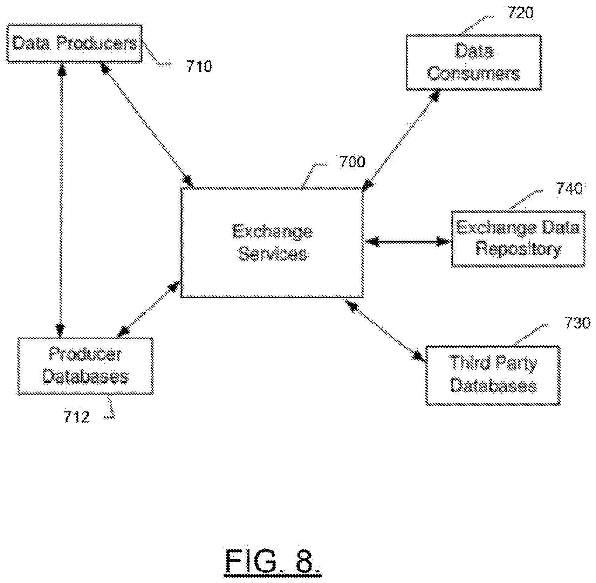

FIG. 8 illustrates a block diagram of a communication paradigm that is achievable using an example embodiment. Exchange services 700 may be provided (e.g., by the ACE platform 44) to members of the ACE. The members may include data producers 710 and data consumers 720. In some cases, the data producers 710 may store at least some of the data in producer databases 712. However, some of the data from data producers 710 may be provided in real-time (e.g., from aircraft in the air via the ATG links among links 31 of FIG. 1). Some data may also be provided from third party databases 730. Data provided either from the data producers 710 (directly or via the producer databases 712) or the third-party databases 730 may be communicated directly or indirectly to the data consumers 720. In some cases, the data provided from the data producers 710 or third-party databases 730 may be stored at an intermediate location prior to delivery to the data consumers 720. The intermediate location may be an exchange data repository 740 (e.g., an exchange data mart) that may store data that can be delivered upon request after such data was previously stored during real-time recording of such data or in block data uploads from the producer databases 712 or the third-party databases 730. This may enable data consumers to make use of historical data.

In some embodiments, information for the data producers 710 is provided in real-time from an aircraft. Thus, for example, a "smart cookie" descriptive of the actual current location of the aircraft or its destination may be useful for provision to data consumers 720 so that any services offered to individuals on the aircraft may be properly targeted to the individuals and tailor their internet / web browsing experience to each unique person. Other feeds into the system may include GPS data, GPS time, ADS-B (automatic dependent surveillance-broadcast), SWIM (system wide information management) and numerous other safety related, or non-safety related information streams or pieces.

The producer databases 712 and the third-party databases 730 may be external to the network 30, but the exchange data repository 740 may be internal to the network 30. However, other architectures are also possible. In some cases, the data producers 710 may transmit data to be used for exchange services 700 in real-time or near real-time for immediate distribution to the data consumers 720 or for storage at the exchange data repository 740. Alternatively, such data may be communicated post hoc, either after landing (directly from the aircraft) or from the producer databases 712 (which may receive the data in real-time or after the fact as well). Data from the data producers 710 may also find its way to the producer databases 712 via the exchange services 700 in embodiments where the producer databases 712 are part of the exchange. Queries for data to be provided by the exchange services 700 may be provided from the producer databases 712 (e.g., requesting transmission of data thereto), from the exchange data repository 740 (e.g., requesting transmission of data for storage thereat), or from data consumers 720. The data consumers 720 may request data retrieval to access the data for their own uses, or may request various insights, applications, or other services that are generated and accessible from the exchange services 700.

In order to provide the communication paradigm described in reference to FIG. 8, the security module 70 of FIG. 2A may be used to manage the security of the information transfers that are supported by the ACE platform 44. Security can be provided by managing the network 30 as a centralized network, or as a distributed network. In instances in which the network 30 is managed as a centralized network, integrity management may be centrally managed by the security module 70 for the network 30. The network 30 may use a typical communication protocol associated with provision of web services (e.g., HTTPS/REST). Applications may be executed using virtually any language and runtime environment, and client authentication may be accomplished using cryptographic keys.

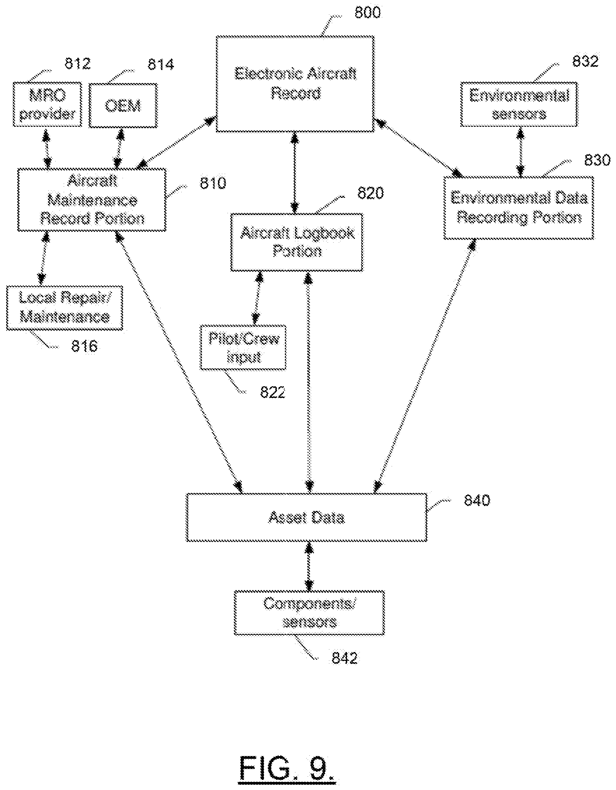

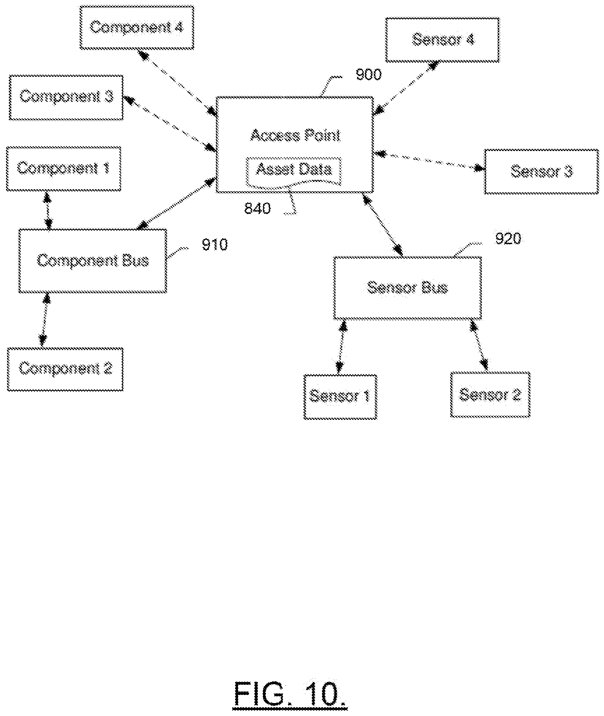

For a distributed network structure, the security module 70 may be configured to employ a blockchain-specific wire protocol. Integrity management would be accomplished in a distributed fashion in which all components of the network act as a database having network protocols that are distributed and decentralized, but which allow all information to be stored in blocks having a transparent and trackable history that is verified and sealed by the protocol itself. Client authentication may still be accomplished using cryptographic keys, but a number of applications may be uniquely crafted (e.g., smart contracts) to take advantage of the use of blockchain technology. The employment of blockchain technology is described in greater detail in reference to FIGS. 9 and 10 below.

As mentioned above, the ACE platform 44 allows members to have access to the data of other members for the development of useful applications or APIs, and for the facilitation of information exchange and use without requiring individual entities to work out specific contracts or partnerships. In this regard, by agreeing to become a member, each member may further agree to either provide a specific set of information (e.g., if the member is a data producer) or agree to a specific predefined set of limitations on the use of data received (e.g., if the member is a data consumer). In some cases, the information and/or services or content exchanged via the ACE platform 44 may also be subject to prior agreements or governance restrictions as to format, protocol, confidentiality requirements and/or the like. Thus, for example, the ecommerce module 72, the implementation module 76 and the development module 78 may each have tools that conform to the prior agreements and allow processing of data and/or provision of services based on such data to be provided in a manner that is both usable by other members and also allows any applicable service charges to be applied and handled via the ACE platform 44 as well.

Example embodiments may enable a whole new set of services to be provided using various data generation, data processing and distribution entities that may be users of the ACE platform 44. For example, an aircraft routing (i.e., flight path) service may be a member. The aircraft routing service may act as both a data producer and a data consumer with respect to generation of routing services. In such an example, the aircraft routing service may be one instance of the clients 20 shown in FIG. 1. The aircraft routing service may run an aircraft routing application that is one instance of the client applications 22 of FIG. 1. The aircraft routing application may be a data consumer with respect to real-time position information provided by a plurality of aircraft (i.e., data producers 710), including, for example, through the FIXM protocols. The aircraft routing application may also receive weather information from third party databases 730, including, for example, through the WXXM protocols, that might include arrival airport landing conditions, ground traffic, gate availability, crew availability, and could also incorporate turbulence or weather information (in real-time) from the aircraft, from other aircraft, or from other information services. Based on the trajectories of the aircraft, and the weather and/or turbulence information (e.g., via pilot reports (PIREPs)), the aircraft routing application may provide a computation for rerouting of the aircraft, including coordination, for example, through the AIXM protocols. As such, the aircraft routing application may (e.g., in real-time) send a rerouting option to the aircraft (thereby acting as a data producer with respect to the aircraft). The aircraft may receive the rerouting option and request approval, either through pilot coordination with ATC, or through machine-to-machine coordination with ATC, from air traffic control to employ the rerouting option.

Within the context of the example described above, the aircraft may use the ATG or satellite links or any other wireless link with which an aircraft may be associated (e.g., air-to-sea links or air-to-air links) described above to provide real-time or near real-time data to and from the aircraft routing service and one or both entities may pay an agreed to rate with the network service provider for the corresponding data services. The exchange services 700 of the ACE platform 44 may enable tracking of the data used for billing purposes and may use the ecommerce module 72 to handle such billing. The data obtained from the third-party databases 730 (if any) may also be charged using the ecommerce module 72. Meanwhile, the aircraft routing service itself may have been developed or integrated into the system (at least in part) using the development module 78. Charges associated with the services provided to the aircraft (or air traffic control) may also be handled via the ecommerce module 72. Auditing, tracking and/or logging of information may be managed by the implementation module 76, and such information may be provided to the ecommerce module 72 to facilitate billing. Meanwhile, all of the security for all communications may be managed by the security module 70.

In some example embodiments, the exchange services 700 may include a service dedicated to maintenance of an electronic aircraft record. The electronic aircraft record may be a record maintained to include information associated with the history of a particular aircraft. The electronic aircraft record may be maintained in either a centralized or distributed fashion as one of the exchange services 700 under the communication paradigm shown in FIG. 8. As such, the electronic aircraft record may be stored (e.g., in the exchange data repository 740 or another location) and maintained based on the communication paths shown in FIG. 8.

As such, the electronic aircraft record may be maintained electronically, and may be maintained on the basis of inputs provided from a plurality of different sources (e.g., members and third parties). In an example embodiment, the electronic aircraft record may be maintained by one of the data consumers 720 as part of the exchange services 700. The data consumer 720 that maintains the electronic aircraft record may receive input from the data producers 710 (e.g., in real-time or post hoc), from producer databases 712, third party databases 730, and/or the exchange data repository 740 to update the electronic aircraft record. In some cases, each update may be verified for authenticity. In embodiments that practice centralized control (e.g., a centralized network), the verification may be made by ensuring that each party providing information is authenticated. In embodiments that practice distributed control (e.g., a distributed network), blockchain may be employed for authentication of each information entry to the electronic aircraft record. As such, blockchain or other network security services may be used in some cases for the assured delivery of data (e.g., without regard to path), and for the assurance of the authenticity of the data delivered. By assuring delivery (e.g., using blockchain), safety related traffic data can be transmitted over non-safety-specific channels.

In some embodiments, the electronic aircraft record may include a plurality of different portions associated with corresponding different types of information about the aircraft. In some examples, one of the portions of the electronic aircraft record may be an aircraft maintenance record portion. The aircraft maintenance record portion may record data regarding the total time in service of aircraft components (e.g., the airframe, engine, motors, fuel cells, propellers, rotors, appliances, etc. of the aircraft) and any major alterations to such components. Thus, the aircraft maintenance record portion may effectively be a record of the maintenance history of the aircraft. The current status of each of the aircraft components including the time since the last overhaul of various components may also be recorded in the aircraft maintenance record portion. The aircraft maintenance record portion may also include information indicative of the inspection status of the aircraft and any components requiring inspection. The aircraft maintenance record portion may include data partially or entirely provided by an external program associated with a member or a third party, or the aircraft maintenance record portion may include data that is partially or entirely provided as one of the exchange services 700 (i.e., using software or programs that are provided for member usage via the network 30). Combinations of the above methods of receiving data may also be employed. Moreover, individual authorized and authenticated actors may submit data for inclusion in the aircraft maintenance record portion when such actors have been properly identified and credentialed.

In some cases, the aircraft maintenance record portion may itself further include portions dedicated to individual components or systems of the aircraft. For example, the aircraft maintenance record portion may include an engine portion dedicated to recording activity associated with the engine, an airframe portion dedicated to recording activity associated with the airframe, and various other portions dedicated to recording activity associated with such corresponding portions. These portions could, in some cases, be individually maintained records in and of themselves. Similarly, the aircraft maintenance record portion may be a separate record from the other portions. As such, for example, the electronic aircraft record may be a single record or a collection of individual records.

When data is stored in the aircraft maintenance record portion, regardless of its origin, the data may be in a format that is both known and accessible to other members for use in application development, research, service provision and/or the like. Access to some data may be free and open to all, while access to other data may be restricted amongst the membership. For example, de-identified data may be accessible to any member at any time. However, data that is not de-identified may only be accessible if the owner of such data grants permission for access. Aircraft maintenance data may be de-identified so that the specific aircraft to which the data applies is not necessarily known. De-identified data may be stripped of individual identification information or may be aggregated to ensure that the identities of individual aircraft are not determinable. De-identified data may be useful for application developers and researchers, while preserving the privacy of individual aircraft owners/operators.

**In** an example embodiment, de-identified data may be stored in the exchange data repository 740 for access to members through the exchange services 700. The implementation module 76 may handle the data and access thereto. However, if there are any costs or charges to be applied to grant access to such data, then the ecommerce module 72 may be employed to handle such transactions. Meanwhile, as in all cases, the security module 70 may ensure that the proper authorizations and authentications are received to identify a requesting party as a member authorized to receive any data requested. After the data is provided, if desired, the development module 78 may be employed along with application development tools provided therein to develop applications that use the data. The applications developed may include, for example, new tools for managing the aircraft maintenance record portion, in which case such tools may become part of the exchange services 700 accessible to members.

Another portion of the electronic aircraft record may be an aircraft logbook portion. The aircraft logbook portion may store information indicative of routes traveled, schedule information, crew information for the aircraft (e.g., pilot in command), number of landings, location, time and data of takeoff and landings, and/or the like. The aircraft logbook portion may effectively be a record of the operational history of the aircraft from an event-based perspective or it can be a living logbook, recording as many parameters as desired in an ongoing or periodic fashion. In some cases, the electronic aircraft record may also include an environmental data recording portion, which further records operational history information of the aircraft with respect to various environmental conditions in and around the aircraft from a timeline perspective and can be correlated, automatically or on demand, with various official logbook entries as needed. A sensor network deployed throughout the aircraft may gather environmental data to be recorded at the environmental data recording portion. As with the aircraft maintenance record portion above, data associated with the environmental data recording portion and/or the aircraft logbook portion may each be either de-identified prior to provision to other members, or (e.g., when an agreement between members dictates, or when the data producer allows) data that has not been de-identified may be shared via the exchange services 700.

Providing input to the electronic aircraft record under a centralized network paradigm may be accomplished under the control of one or more instances of the processing circuitry 50 of FIG. 2A, acting as a centralized control for all aspects of control of the electronic aircraft record. However, as discussed above, some example embodiments may employ blockchain technologies in a distributed fashion. In such examples, the electronic aircraft record may effectively be a distributed leger-based data model for maintaining and authenticating aircraft data. In such an embodiment, the electronic aircraft record may effectively be maintained in a distributed fashion by multiple parties, none of whom own the full record and without any single intermediary to collect and maintain the data. Thus, not only could blockchain be used with respect to communications conducted over the ACE platform 44 generally, but blockchain could also (or alternatively) be used to manage the maintenance of individual records (e.g., the electronic aircraft record) that are exchangeable via the ACE platform 44. Moreover, as will be discussed in greater detail below, data associated with individual platforms may also be managed using blockchain.

Accordingly, in some example embodiments, a blockchain-based consensus framework may be used at multiple levels within the ecosystem created by the ACE platform 44. In this regard, for example, data generated by individual members, actors or assets (e.g., individual aircraft or organizations) within the ecosystem may employ blockchain to maintain a record regarding specific types of data or information shared within the system 10. Thereafter, at a higher level, a specific record (e.g., the electronic aircraft record) that may be communicated or exchanged on the platform itself (i.e., on the ACE platform 44) may rely on blockchain.

FIG. 9 illustrates a block diagram of a multi-level implementation of blockchain within an example embodiment. As shown in FIG. 9, An electronic aircraft record 800 may be maintained in a distributed fashion by employing a permissioned or permissionless blockchain implementation with multiple participants or actors being capable of providing authentic changes to a distributed ledger (i.e., the electronic aircraft record 800). Although the actors are shown interacting with specific portions of the electronic aircraft record 800 (e.g., the portions described above), such portions need not necessarily be separate in all implementations.

As shown in FIG. 9, an aircraft maintenance record portion 810 may have various inputs provided thereto from MRO providers 812, OEM 814, and local repair or maintenance facilities 816 either in the form of individual actors at such organizations, or by a common account associated with such organizations. Each change to the aircraft maintenance record portion 810, and thereby also to the electronic aircraft record 800, may be made based on a blockchain consensus framework established so that every entry is authenticated before entry inti the record (or record portion) is allowed. Once the entry is made, its authenticity can be assumed to be proven and immutable.

An aircraft logbook portion 820 may also be provided in the manner described above. Any entry submitted by a pilot, owner, operator, crew member, or via IoT, by the aircraft parts themselves, etc. (e.g., pilot/crew input 822) may be authenticated before entry into the record (or record portion) is allowed. Thereafter, all such entries are again assumed to be proven and immutable. Similarly, the environmental data recording portion 830 may receive individual inputs from a sensor network of environmental sensors 832 (e.g., aircraft sensors detecting pressure, velocity, altitude, heading, airspeed, etc.). As discussed above, each of the portions may be a record in its own right or may be portions of a single record. In cases where the "portions" are actually individual records, blockchain may be practiced at a first level to maintain each record, and then again at a second level to ensure the authenticity of the larger record (i.e., the electronic aircraft record 800).

In some example embodiments, some or even each of the portions of the electronic aircraft record 800 (i.e., the aircraft maintenance record portion 810, the aircraft logbook portion 820 and the environmental data recording portion 830) may receive asset data 840 directly from the asset (e.g., the aircraft) with which the record is associated. In such an example, components/sensors 842 on the aircraft (or asset) may all report to a central location regarding their respective statuses, conditions, or other data measured at the components/sensors 842. Each component/sensor 842 may communicate using blockchain to ensure that the record of asset data 840 is filled with authentic data. Moreover, in some cases, the electronic aircraft record 800 (or portions thereof) may be maintained remote from the aircraft, but at least some of the data used for maintaining the electronic aircraft record 800 (or portions thereof) may be provided in real-time via the one of the links 31 that is a real-time ATG link. Thus, one need not wait until the aircraft is on the ground, at the gate, in the hanger, or in a repair facility to offload data associated with individual components or sensors. Instead, asset data 840 can be modified (e.g., using the security of blockchain) in real time, while the aircraft is still in the air.

In the context of FIG. 9, some example embodiments may allow pilots, crew, maintenance personnel, and/or the like to add data to a blockchain data store. The data added may be validated prior to encoding on a blockchain by any available method. Moreover, the entry of data onto a blockchain node may be accomplished by any suitable party in any suitable way. In some cases, example embodiments could be implemented in what is effectively a multi-network structure. The first network may be a traditional client-server designed network for clients that do not participate as a blockchain participant node. The second network would be the blockchain network itself. In such an example, the first network may query a node on the second network, where the node on the second network looks at the blockchain data and returns the information. Alternatively, the first network may expose an API that allows data to be added to the blockchain network.

As one example implementation of blockchain relative to activities associated with the ACE platform 44, a transaction ledger could be created for trading loyalty points (e.g., frequent flier miles, or other loyalty programs) for goods and services while in-flight. In this regard, it is currently difficult and opaque for airline vendors to get paid for services when passengers trade in airline miles. If the ACE platform 44 is configured to employ blockchain techniques, the ACE platform 44 could essentially provide a reliable exchange service to enable loyalty programs to conduct transactions with consumers in-flight and in real time. Buffering of communications may be included in some cases where there is no advantage to having real time information exchanges. However, the in-flight, real time aspect may be advantageous to some use cases. The ACE platform 44 may include a loyalty program module configured to allow participants define appropriate conversion requirements or other data to enable their respective loyalty points (i.e., their currency) to be valued in the exchange by other exchange members in a way that is agreeable to all exchange members. As such, for example, a consumer on a flight could use airline miles to purchase drinks, entertainment or other services (including products sold or offered for sale via the exchange) even if the services or goods provided are not associated with the loyalty program for which the corresponding points are used as currency. The ACE platform 44 may therefore not only enable an in-flight consumer to engage in various types of commerce with the exchange members in-flight, but the exchange members could each get appropriate compensation from each other in real time. A second example implementation of blockchain relative to activities associated with the ACE platform 44, involves a transaction ledger, in a context where real time connectivity is provided to consumers in-flight, whereby once the consumer connects to the ACE platform 44, it may immediately be known that the consumer is on the flight and the reward points associated with the flight may instantly be awarded to the consumer and available for purchasing goods and services on the same flight for which the award points were awarded. Thus, the ACE platform 44 may enable instant redemption in-flight and employing blockchain may further provide a transaction ledger that is also maintained in real time in order to allow funds, credits, etc., to be passed between parties involved in transactions (i.e., exchange members) without concern for intrusion from third parties and with full confidence in the authenticity of transactions occurring via the ACE platform 44. Thus, devices (e.g., personal communication devices such as laptops, smartphones, etc., and servers or ground based computer terminals) both on the ground and in-flight may communicate with each other via the ACE platform 44 to exchange in commerce in a unique environment that may, in some cases, take advantage of blockchain technology. In this regard, all such devices may be on the ground, in the air, or split between the ground and the air in various example embodiments and still leverage the ACE platform 44 and the associated APIs thereof.

FIG. 10 illustrates a block diagram of a communication environment on an aircraft configured to generate authenticated asset data 840 in accordance with an example embodiment. As shown in FIG. 10, a plurality of components (e.g., component 1 and component 2) may be operably coupled to an access point 900 (or other data aggregation module or processing/communication device) that may either directly or indirectly communicate the asset data 840 to other components as shown in FIG. 9 via a component bus 910. The component bus 910 may be a single data wire or a collection of data wires to carry component data from the components (1 and 2) to the access point 900. The access point may also be operably coupled to some components (e.g., component 3 and component 4) wirelessly. Components 3 and 4 may each have radio, antennas and/or other wireless coupling devices to enable wireless communication with the access point 900, or the components 3 and 4 could alternatively have wireless communication equipment operably coupled thereto to relay information to the access point 900. In either case, the access point 900 may be receive data from each of the components (1-4) and process, translate, aggregate or otherwise prepare such data for further communication as the asset data 840.

Similarly, sensor 1 and sensor 2 may be operably coupled to the access point 900 via a sensor bus 920, which may be the same or different from the component bus 910. Meanwhile, other sensors (e.g., sensor 3 and sensor 4) may be operably coupled to the access point 900 wirelessly in a manner similar to that described above for components 3 and 4. After reaching the access point 900, data provided to the access point 900 from any of the sensors (1-4) may be further provided as asset data 840 for inclusion in the electronic aircraft record 800 (or portions thereof).

**In** an example embodiment, data received from any of the sensors (1-4) or components (1-4) may be provided via blockchain to define the asset data 840. Thereafter, the asset data 840 may be provided as a record of data where each piece of data is authenticated using blockchain techniques. The record (i.e., the asset data 840) can then be accepted as authentic since each piece of data used to populate the record is known to be authentic. Furthermore, in some cases, each component or sensor that is added to the system may initially communicate and authenticate itself to the access point 900. For example, component 1 may be replaced with a new component 1 having a particular identification (e.g., part number). The new component 1 may be installed into the component bus 910 and immediately register with the access point 900. Thereafter, as a registered component, the new component 1 may report its data using blockchain techniques and make use of data using blockchain techniques. The data reported may be reported in association with the particular identification of the new component 1. Sensors may operate similarly. Accordingly, the data gathered by each sensor or component may be recorded in association with the part number or other identification of the component or sensor. If a component fails to report data, or provides improper data, the component may be identifiable as needing investigation to determine whether a fault exists. Furthermore, data regarding each component may be recorded and provided (e.g., in real-time) via an ATG communication link as a wireless, real-time flight data recorder for activities of each component of the aircraft that is monitored for reporting of the asset data 940.

In other words, the aircraft, which is made up of many discrete parts that may be intelligent (colloquially referred to as the Internet of Things (IoT)) effectively can have an internal blockchain within the aircraft, which can be used to ensure an accurate aircraft parts and health record is maintained with impeccable traceability. This could go so far as to working with the aircraft systems in such a way as to only use input from a part if it is considered an accepted part of the aircraft itself, as recognized by each part of the aircraft which make up the distributed nodes of the on-aircraft blockchain. It should be appreciated that a 'part' in the context of an aircraft can mean more than just an obvious physical element of the aircraft, but also can refer to software or firmware. This can ensure that parts control is maintained inflight, thus preventing hackers from attempting to insert malicious code (which by definition would not validate/authenticate on the aircraft's internal blockchain). Thus, this may be an example of how internal blockchain may be used to implement the living logbook discussed above.

Accordingly, blockchain can be implemented at multiple levels and in multiple different or distinct ways within the system 10. In this regard, blockchain may be employed for maintaining specific ledgers or records that can be shared via the ACE platform 44 (e.g., the electronic aircraft record 800 (or portions thereof), and blockchain may be used to ensure that entries to the specific ledgers or records from specific entities outside the ACE platform 44 (e.g., individual aircraft or facilities) are authenticated prior to being allowed for entry onto the ACE platform 44. Blockchain could be used within the context of IP transfers as well in order to make the IP asset library 140 traceable, and ensure that chain of custody information for the IP assets 500 and any transactions associated therewith is reliably updated and tracked. Blockchain may also be employed to allow management of smart contracts on the ACE platform 44 and other exchanged data and services on the ACE platform 44.

For example, the aircraft may have multiple operational devices (Electronic Flight Bags or EFBs, many of which are now tablets like iPads or Surface Pros) in addition to the physical parts of the aircraft. In an example embodiment, each device that is supposed to be on the internal network of the aircraft for the duration of a particular flight may registers itself to the internal network, in advance of the flight, as part of the pre-flight process. As part of the registration, pilots or crew members may login to their EFBs or other smart devices to unlock them (e.g., via password, biometric, etc.), but also log them in or otherwise authenticate and register the devices to the internal network via any suitable authentication/registration means. In some cases, a unique service set identifier (SSID) that is accessible only by the crew/pilots may be used for registration. The internal network of the aircraft could then 'register' those devices as authorized EFBs for the aircraft for the flight. Moreover, in some cases, each external device (e.g., personally owned device) may need to be accepted or recognized by other devices in the network, so that each accepted device is a known device of crew members/pilots on the flight, and is recognized as such. All this information may then be put into a dynamic blockchain authentication key internal to the aircraft and could register this with the ACE/outside world if and when connectivity is or becomes available. Thus, even personally owned devices could become part of the authenticated internal network of the aircraft for a limited period of time (i.e., a single flight). Accordingly, "dynamic blockchain" or "dynamic group blockchain" techniques may be used to temporarily add even personally owned devices to a trusted internal network of an aircraft and then further register such devices to an external network for a limited period of time (one flight) via the procedure.

The blockchain authentication authorization may include each device and the aircraft (e.g., parts and software/hardware) combined, in essence creating a combination key to say indicate that the respective devices are authorized. The combination key could then be registered with the ground (e.g., with the ACE), adding another layer to the combination (and possibly include device validation checks to ensure that the devices match the assigned crewmembers and aircraft). This external dynamic group blockchain ensures that anything that goes up to the aircraft from the ground also needs to possess the dynamic key in order to be deemed valid information.

If a hacker attempts to interject himself/herself, the hacker would clearly not have the combination key since the hacker was not part of the group of devices that formed the combination key prior to the flight whether the hacker attempts to infiltrate from on the aircraft or off the aircraft. At the end of the flight, the dynamic blockchain for the flight may be dissolved, so the dynamic blockchain is temporally limited (e.g., to a particular flight). Thus, even if hacker steals a device that a crew member previously used, and is able to unlock the device, the hacker can still not use the device to infiltrate the internal network on another flight. The other flight would have a different combination key unknown to the hacker and to the device that was previously used as part of the internal network of the aircraft on a prior flight. Moreover, the hacker's device may not be accepted in a situation where, for example, new devices must be accepted by existing devices on the network. For example, at least 2 (or a majority) of the other devices on the flight may need to vote to accept any new device seeking entry into the internal network in order to issue the combination key for the flight to the new device.

Based on the descriptions of FIGS. 9 and 10, it should be appreciated that the status of individual components or parts can be determined in real-time (e.g., while the aircraft is in the air) or historically, as needed. The proactive or reactive ordering of replacement parts/components, or the ordering of maintenance, whether reactive, preventive, or predictive, on such parts/components may then be scheduled or handled while the aircraft is still in the air. The ordering and deliver of the part can then be coordinated with the location and schedule of the aircraft to maximize availability of the aircraft. Trusted parts can be identified and installed on the aircraft. Moreover, such parts can authenticate themselves to the aircraft (or access point) upon installation using the on-aircraft blockchain, which itself can then authenticate with an off-aircraft blockchain, providing for further data integrity.

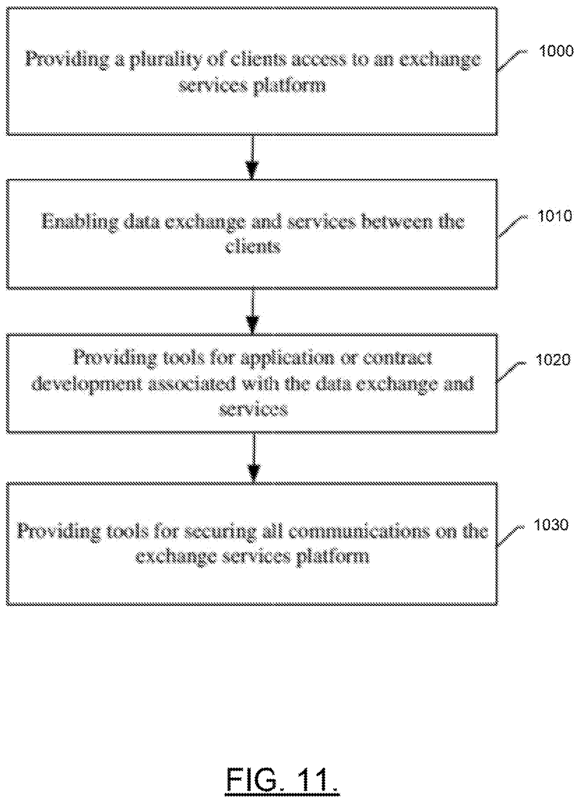

From a technical perspective, the ACE platform 44 may be used to support some or all of the operations described above. As such, the platform described in FIG. 2A may be used to facilitate the implementation of several computer program and/or network communication-based interactions. As an example, FIG. 11 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

**In** this regard, a method according to one embodiment of the invention is shown in FIG. 11. The method may include providing a plurality of clients access to an exchange services platform at operation 1000. The provision of access may be based upon each client becoming a member of the exchange, or otherwise agreeing to terms and conditions for participation in the exchange. The terms and conditions may include policies for the sharing of data with other members/parties and, in some cases, defining formats for sharing such data. The method may further include enabling data exchange and services between the clients at operation 1010. It should be appreciated that the clients may, each and of themselves, be a platform in their own right which connects to other sources of data. Thus, the exchange in that sense is a platform of platforms. The exchange of services and data may be coordinated in a way that allows at least some transactions to be handled via the exchange services platform without separate need for agreements or one-on-one negotiations amongst the parties. The method may also include providing tools for application or contract development associated with the exchange of data and services at operation 1020. Thus, even to the extent the parties do wish to make special agreements associated with the services or data, tools are provided on the exchange to allow the parties to generate and process the contracts in an abbreviated way. Such smart contracts may rapidly accelerate the ability to come to agreement for services related to the exchange. The method may further include providing tools for securing all communications on the exchange services platform 1030. The tools may include using blockchain techniques or other centralized security techniques.

In an example embodiment, an apparatus for performing the method of FIG. 11 above may comprise a processor (e.g., the processor 52) or processing circuitry configured to perform some or each of the operations (1000-1030) described above. The processor may, for example, be configured to perform the operations (1000-1030) by performing hardware implemented logical functions, executing stored instructions, or executing algorithms for performing each of the operations. In some embodiments, the processor or processing circuitry may be further configured for additional operations or optional modifications to operations 1000 to 1030.

In some example embodiments, an aerospace commerce exchange system is provided. The system includes a network, a plurality of clients operably coupled to the network, and an aerospace commerce exchange platform operably coupled to the network to provide exchange services to the clients. At least one of the clients is operably coupled to the aerospace commerce exchange platform via a real-time, air-to-ground wireless communication link to provide or receive data associated with at least one of the exchange services.

In some embodiments, the system (and a corresponding apparatus configured to perform the operations that distinguish the system) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In an example embodiment, at least one of the clients may include an aircraft. The aircraft may provide data from components or sensors of the aircraft to the aerospace commerce exchange platform. The at least one of the exchange services may include providing an electronic aircraft record. In an example embodiment, the electronic aircraft record comprises an aircraft maintenance record portion, an aircraft logbook portion or an environmental data recording portion. In such examples, one or more of the aircraft maintenance record portion, the aircraft logbook portion and the environmental data recording portion include asset data provided in real-time from the components or sensors of the aircraft. In some cases, the electronic aircraft record may include a database or ledger maintained using blockchain techniques. In an example embodiment, the aerospace commerce exchange platform may include a development module configured to enable a first client to use data provided from a second client to create a tool accessible via the network for use as one of the exchange services. Additionally or alternatively, the aerospace commerce exchange platform may include an ecommerce module configured to enable a first client to conduct a transaction with a second client as one of the exchange services for which billing is handled via the aerospace commerce exchange platform. In such an example, the aerospace commerce exchange platform may include a security module configured to enable secure communication associated with the exchange services between the clients. In some cases, the security module may include processing circuitry at a centralized location in the network to manage authorization or authentication of the communication. Additionally or alternatively, the security module may include distributed processing circuitry associated with management of authorization or authentication of the communication. **In** such an example, the distributed processing circuitry may employ blockchain techniques. **In** some example embodiments, blockchain techniques may be employed at multiple levels within the system. **In** some cases, asset data may be provided in real-time from the aircraft and the asset data is provided via an asset data record maintained using the blockchain techniques. Additionally or alternatively, the exchange services may include at least one service associated with the asset data record, and multiple clients may communicate with each other to perform the at least one service employing blockchain techniques. Additionally or alternatively, a plurality of components or sensors of the aircraft may be operably coupled to an access point wirelessly or via a bus. In such an example, the components or sensors of the aircraft may each be authenticated to the access point prior to communication with the access point such that data from the components or sensors is associated with each respective one of the components or sensors from which the data originated. **In** an example embodiment, smart contracts may be provided as one of the exchange services.

**In** another example embodiment, an aerospace commerce exchange system is provided to include a network, a plurality of clients operably coupled to the network, and an aerospace commerce exchange platform operably coupled to the network to provide exchange services to exchange members via respective ones of the clients. The aerospace commerce exchange platform may include an IP asset library configured to store information regarding IP assets provided by the exchange members, and a search module configured to enable searching relative to the IP assets by the exchange members. The search module may be configured to facilitate contact between a searcher and a provider relative to a particular asset stored in the IP asset library and found by the searcher using the search module.

**In** some embodiments, the system (and a corresponding apparatus configured to perform the operations that distinguish the system) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In an example embodiment, the aerospace commerce exchange platform may include a data layer for enabling members to access aerospace data via the network, an algorithm layer configured to include software packages (the packages being associated with corresponding particular functions) that are transferable among the members, a developer layer configured to facilitate additional development of applications or services using the data and/or software packages associated with the data layer or the algorithm layer, and an IP layer provided by the IP asset library and the search module. The IP layer may be configured to enable management of the IP assets associated with the software packages, the applications or the services. Additionally or alternatively, the IP asset library employs blockchain techniques to manage chain of custody and transaction history for the IP assets. In an example embodiment, the search module may be configured to enable multi-dimensional searching relative to the IP assets. In some cases, the multi-dimensional searching may include searching relative to at least three unrelated categorically distinct groups by which the IP assets are characterized. In an example embodiment, the at least three unrelated categorically distinct groups may include an object dimension, a functional dimension and an IP type dimension. In some cases, each of the IP assets may be assigned one or more tags within each of the unrelated categorically distinct groups. The one or more tags may be hierarchically organized into levels of specificity. In an example embodiment, search results generated by the search module may be ranked based on a level of specificity of the one or more tags assigned to each of the IP assets returned by the search module. In some cases, the search module may be configured to employ automatically generated data inferences during generation of search results. In an example embodiment, the search module may be configured to employ manually confirmed data inferences during generation of search results. In an example embodiment, the aerospace commerce exchange platform may include an ecommerce module configured to enable a first member to conduct a transaction with a second member relative to the particular asset for which billing is handled via the aerospace commerce exchange platform.

## Claims

1. An aerospace commerce exchange system comprising:
a network including an air-to-ground communication system via which aircraft provide aerospace data to the network in real time via the air-to-ground communication system;
a plurality of clients operably coupled to the network; and
an aerospace commerce exchange platform operably coupled to the network to provide exchange services to exchange members via respective ones of the clients,
wherein the aerospace commerce exchange platform comprises an IP exchange module including:
a user interface via which the exchange members submit IP assets for storage and tag the IP assets with tags classifying the IP assets by function and type of the IP assets, the IP assets being defined by functional software packages, applications or services related to usage of the aerospace data;
an IP asset library configured to store information regarding IP assets provided by the exchange members and the tags assigned by the exchange members,
a search module configured to receive a query defining a search relative to the IP assets by the exchange members, and configured to conduct the search based on correlation of the query to the tags, and
wherein the search module is configured to facilitate contact between a searcher and a provider relative to a particular asset stored in the IP asset library and found by the searcher using the search module by providing contact information of the provider to the searcher.

2. The system of claim 1, wherein the aerospace commerce exchange platform comprises:
a data layer for enabling members to access the aerospace data via the network;
an algorithm layer configured to include software packages associated with corresponding particular functions that are transferable among the members;
a developer layer configured to facilitate additional development of the applications or services using the aerospace data and/or the software packages associated with the data layer or the algorithm layer; and
an IP layer provided by the IP asset library and the search module to enable management of the IP assets associated with the software packages, the applications or the services.

3. The system of claim 1, wherein the IP asset library employs blockchain techniques to manage chain of custody and transaction history for the IP assets.

4. The system of claim 1, wherein the search module is configured to enable multi-dimensional searching relative to the IP assets.

5. The system of claim 4, wherein the multi-dimensional searching includes searching relative to at least three unrelated categorically distinct groups of aircraft components by which the IP assets are characterized.

6. The system of claim 5, wherein the at least three unrelated categorically distinct groups include an object dimension, a functional dimension defining the function of the IP assets and an IP type dimension defining the type of the IP assets.

7. The system of claim 6, wherein each of the IP assets is assigned one or more of the tags within each of the unrelated categorically distinct groups, the one or more tags being hierarchically organized into levels of specificity.

8. The system of claim 7, wherein search results generated by the search module are ranked based on a level of specificity of the one or more tags assigned to each of the IP assets returned by the search module.

9. The system of claim 8, wherein the search module is configured to employ automatically generated data inferences during generation of search results.

10. The system of claim 8, wherein the search module is configured to employ manually confirmed data inferences during generation of search results.

11. The system of claim 1, wherein the aerospace commerce exchange platform comprises an ecommerce module configured to enable a first member to conduct a transaction with a second member relative to the particular asset for which billing is handled via the aerospace commerce exchange platform.

## Patentansprüche

1. Luft- und Raumfahrt-Börsensystem, umfassend:
ein Netzwerk, das ein Luft-Boden-Kommunikationssystem aufweist, über das Flugzeuge dem Netzwerk in Echtzeit Luft- und Raumfahrtdaten über das Luft-Boden-Kommunikationssystem bereitstellen;
mehrere Clients, die mit dem Netzwerk wirkgekoppelt sind; und
eine Luft- und Raumfahrt-Börsenplattform, die mit dem Netzwerk wirkgekoppelt ist, um Börsenmitgliedern Börsendienste über jeweilige der Clients bereitzustellen,
wobei die Luft- und Raumfahrt-Börsenplattform ein IP-Börsenmodul umfasst,
umfassend:
eine Benutzerschnittstelle, über die die Börsenmitglieder IP-Assets zur Speicherung einreichen und die IP-Assets mit Markern versehen, die die IP-Assets nach Funktion und Typ der IP-Assets klassifizieren, wobei die IP-Assets durch funktionale Software-Pakete, Anwendungen oder Dienste definiert sind, die sich auf die Nutzung der Luft- und Raumfahrtdaten beziehen;
eine IP-Asset-Bibliothek, die dazu eingerichtet ist, Informationen bezüglich der durch die Börsenmitglieder bereitgestellten IP-Assets und die durch die Börsenmitglieder zugewiesenen Marker zu speichern,
ein Suchmodul, das dazu eingerichtet ist, eine Anfrage entgegenzunehmen, die eine Suche in Bezug auf die IP-Assets durch die Börsenmitglieder definiert, und dazu eingerichtet ist, die Suche auf der Grundlage einer Korrelation der Anfrage mit den Markern durchzuführen, und
wobei das Suchmodul dazu eingerichtet ist, den Kontakt zwischen einem Suchenden und einem Anbietenden in Bezug auf ein spezielles Asset, das in der IP-Asset-Bibliothek gespeichert ist und durch den Suchenden unter Verwendung des Suchmoduls gefunden wurde, zu vermitteln, indem es dem Suchenden Kontaktinformationen des Anbieters zur Verfügung stellt.

2. System nach Anspruch 1, wobei die Luft- und Raumfahrt-Börsenplattform umfasst:
eine Daten-Ebene, um es Mitgliedern zu ermöglichen, über das Netzwerk auf die Luft- und Raumfahrtdaten zuzugreifen;
eine Algorithmus-Ebene, die dazu eingerichtet ist, Software-Pakete, die mit entsprechenden speziellen Funktionen verknüpft sind, zu enthalten, die zwischen den Mitgliedern übertragbar sind;
eine Entwickler-Ebene, die dazu eingerichtet ist, die zusätzliche Entwicklung der Anwendungen oder Dienste unter Verwendung der Luft- und Raumfahrtdaten und/oder der Software-Pakete, die mit der Daten-Ebene oder der Algorithmus-Ebene verknüpft sind, zu unterstützen; und
eine IP-Ebene, die durch die IP-Asset-Bibliothek und das Suchmodul bereitgestellt wird, um das Management der mit den Software-Paketen, den Anwendungen oder den Diensten verknüpften IP-Assets zu ermöglichen.

3. System nach Anspruch 1, wobei die IP-Asset-Bibliothek Blockchain-Techniken verwendet, um die Obhutskette und die Transaktionshistorie für die IP-Assets zu managen.

4. System nach Anspruch 1, wobei das Suchmodul dazu eingerichtet ist, eine mehrdimensionale Suche in Bezug auf die IP-Assets zu ermöglichen.

5. System nach Anspruch 4, wobei die mehrdimensionale Suche eine Suche in Bezug auf mindestens drei nicht miteinander in Beziehung stehende, kategorisch eigenständige Gruppen von Flugzeugkomponenten umfasst, durch die die IP-Assets charakterisiert sind.

6. System nach Anspruch 5, wobei die mindestens drei nicht miteinander in Beziehung stehenden, kategorisch eigenständigen Gruppen eine Objektdimension, eine Funktionsdimension, die die Funktion des IP-Assets definiert, und eine IP-Typ-Dimension, die den Typ des IP-Assets definiert, enthalten.

7. System nach Anspruch 6, wobei jedem der IP-Assets einer oder mehrere der Marker innerhalb jeder der nicht miteinander in Beziehung stehenden, kategorisch eigenständigen Gruppen zugewiesen sind, wobei das eine oder die mehreren Marker hierarchisch in Spezifitätsstufen organisiert sind.

8. System nach Anspruch 7, wobei durch das Suchmodul generierte Suchergebnisse auf der Grundlage einer Spezifitätsstufe des einen oder der mehreren Marker, die jedem der durch das Suchmodul zurückgemeldeten IP-Assets zugewiesen sind, ranggeordnet werden.

9. System nach Anspruch 8, wobei das Suchmodul dazu eingerichtet ist, während der Generierung von Suchergebnissen automatisch generierte Datenherleitungen zu verwenden.

10. System nach Anspruch 8, wobei das Suchmodul dazu eingerichtet ist, während der Generierung von Suchergebnissen manuell bestätigte Datenherleitungen zu verwenden.

11. System nach Anspruch 1, wobei die Luft- und Raumfahrt-Börsenplattform ein E-Commerce-Modul aufweist, das dazu eingerichtet ist, es einem ersten Mitglied zu ermöglichen, mit einem zweiten Mitglied eine Transaktion in Bezug auf das spezielle Asset durchzuführen, für das die Rechnungserstellung über die Luft- und Raumfahrt-Börsenplattform abgewickelt wird.

## Revendications

1. Système d'échange commercial aérospatial comprenant :
un réseau incluant un système de communication air-sol par lequel les aéronefs fournissent des données aérospatiales au réseau en temps réel via le système de communication air-sol ;
une pluralité de clients connectés fonctionnellement au réseau ; et
une plateforme d'échange commercial aérospatial, fonctionnellement connectée au réseau pour fournir des services d'échange aux membres d'échange via un des clients respectifs,
dans lequel la plateforme d'échange commercial aérospatial comprend un module d'échange de propriété intellectuelle incluant :
une interface d'utilisateur permettant aux membres d'échange de soumettre des ressources de propriété intellectuelle pour le stockage et l'étiquetage des ressources IP avec des étiquettes classifiant les ressources IP selon la fonction et le type des ressources IP, les ressources IP étant définies par des progiciels, applications ou services fonctionnels liés à l'utilisation des données aérospatiales ;
une bibliothèque de ressources IP configurée pour stocker les informations relatives aux ressources IP fournies par les membres d'échange et les étiquettes attribuées par les membres d'échange;
un module de recherche configuré pour recevoir une requête définissant une recherche relative aux ressources IP par les éléments d'échange et pour effectuer la recherche sur la base d'une corrélation entre la requête et les étiquettes et
dans lequel le module de recherche est configuré pour faciliter la prise de contact entre un chercheur et un fournisseur par rapport à une ressource particulière stockée dans la bibliothèque de ressources IP, et trouvée par le chercheur en utilisant le module de recherche en fournissant les informations de contact du fournisseur au chercheur.

2. Système selon la revendication 1, dans lequel la plateforme d'échange de données commerciales aérospatiales comprend :
une couche de données permettant aux membres d'accéder aux données aérospatiales via le réseau ;
une couche algorithmique configurée pour inclure des progiciels associés aux fonctions particulières correspondantes et transférables entre les membres ;
une couche de développement configurée pour faciliter le développement d'applications ou de services utilisant les données aérospatiales et/ou les progiciels associés à la couche de données ou à la couche algorithmique ; et
une couche de propriété intellectuelle (IP) fournie par la bibliothèque de ressources IP et le module de recherche pour permettre la gestion des ressources IP associées aux progiciels, aux applications ou aux services.

3. Système selon la revendication 1, dans lequel la bibliothèque de ressources IP utilise des techniques de blockchain pour gérer la chaîne de traçabilité et l'historique des transactions des ressources IP.

4. Système selon la revendication 1, dans lequel le module de recherche est configuré pour permettre une recherche multidimensionnelle relative aux ressources IP.

5. Système selon la revendication 4, dans lequel la recherche multidimensionnelle comprend une recherche relative à au moins trois groupes de composants d'aéronefs non liés et catégoriquement distincts, qui caractérisent les ressources IP.

6. Système selon la revendication 5, dans lequel les au moins trois groupes non liés et catégoriquement distincts comprennent une dimension d'objet, une dimension fonctionnelle définissant la fonction des ressources IP et une dimension de type d'IP définissant le type des ressources IP.

7. Système selon la revendication 6, dans lequel chacune des ressources IP se voit attribuer une ou plusieurs étiquettes au sein de chacun des groupes non liés et catégoriquement distincts, une ou plusieurs étiquettes étant organisées hiérarchiquement en niveaux de spécificité.

8. Système selon la revendication 7, dans lequel les résultats de recherche générés par le module de recherche sont classés sur la base d'un niveau de spécificité d'une ou plusieurs étiquettes attribuées à chacune des ressources IP renvoyée par le module de recherche.

9. Système selon la revendication 8, dans lequel le module de recherche est configuré pour utiliser des inférences de données générées automatiquement lors de la génération des résultats de recherche.

10. Système selon la revendication 8, dans lequel le module de recherche est configuré pour utiliser des inférences de données confirmées manuellement lors de la génération des résultats de recherche.

11. Système selon la revendication 1, dans lequel la plateforme d'échange commercial aérospatial comprend un module commercial électronique configuré pour permettre à un premier membre d'effectuer une transaction avec un deuxième membre concernant la ressource particulière pour laquelle la facturation est gérée via la plateforme d'échange commercial aérospatial.
